# EUROPEAN PATENT APPLICATION

(11) **EP 4 610 082 A1**
(43) Date of publication of application: **03.09.2025**
(21) Application number: 23882261.3
(22) Date of filing: 06.09.2023
(51) Int. Cl.: B60K 20/02, B60K 20/00, G05G 5/06

(54) **WORK VEHICLE**

(30) Priority: 26.10.2022 JP 2022171631; 26.10.2022 JP 2022171716
(71) Applicant: Kubota Corporation, Osaka 556-8601 (JP)
(72) Inventor: NAGAI Hiroaki, Sakai-shi, Osaka 590-0908 (JP); YANAGIHARA Katsumi, Sakai-shi, Osaka 590-0908 (JP); NAKAJIMA Kenichiro, Sakai-shi, Osaka 590-0908 (JP); MASUDA Ryo, Sakai-shi, Osaka 590-0908 (JP); SAKAI Tatsuya, Sakai-shi, Osaka 590-0908 (JP); EGUCHI Keita, Sakai-shi, Osaka 590-0908 (JP); SHOEN Shigeo, Sakai-shi, Osaka 590-0908 (JP); FUJII Yukari, Sakai-shi, Osaka 590-0908 (JP)
(74) Representative: Müller-Boré & Partner Patentanwälte PartG mbB
(86) International application number: PCT/JP2023/032585
(87) International publication number: WO 2024/090048

(57) **Abstract**

Provided is a working vehicle capable of improving convenience. A working vehicle 1 includes a main shift lever 20 (shift operation tool) capable of performing a shift operation, a switching mechanism 100 capable of switching between a stepped shift operation state in which the main shift lever 20 can be shifted stepwise and a continuously variable shift operation state in which the main shift lever 20 can be shifted steplessly, and the main shift lever 20 (switching operation tool) capable of performing an operation of switching a state of the switching mechanism 100. Furthermore, the switching mechanism 100 includes a support portion 110 (engaged portion) provided in a vehicle body and having a plurality of grooves 112 (recesses) formed according to a shift position of the main shift lever 20 (shift operation tool), and an engaging portion 130 provided to be relatively movable with respect to the main shift lever 20, and the main shift lever 20 (switching operation tool) is capable or switching the engaging portion 130 between a position where the engaging portion can be engaged with the grooves 112 and a position where the engaging portion cannot be engaged with the grooves 112.

## Description

### TECHNICAL FIELD

The present invention relates to a technique of a working vehicle including a shift operation tool capable of performing a shift operation.

### BACKGROUND ART

Conventionally, a technique of a working vehicle including a shift operation tool capable of performing a shift operation is known. For example, Patent Literature 1 discloses such a technique.

Patent Literature 1 describes a tractor including a main shift lever capable of shifting a transmission shift device. As a method of shifting of a shift operation tool such as a shift lever or a shift pedal, there are a stepped shift method in which a stop position of the main shift lever is determined in stages, and a continuously variable shift method in which the main shift lever can be stopped at any position.

However, in the continuously variable shift method in which the stop position of the lever can be stopped at any stop position, there is a disadvantage that reproducibility of the stop position is low and it is difficult to adjust the speed to a target speed. For example, in the case of a tractor, an appropriate working vehicle speed is determined for each mounted implement, and it is desirable that the same work is performed at the same vehicle speed. On the other hand, in the stepped shift method in which the stop position of the lever is determined, the reproducibility of the stop position is high, but there is a problem that it is difficult to finely adjust the speed in addition to hindering the sensuous and smooth operation. As described above, the conventional working vehicle has a problem in terms of convenience.

### CITATION LIST

### PATENT LITERATURE

Patent Literature 1: JP 2020-104704 A

### SUMMARY OF INVENTION

### TECHNICAL PROBLEM

One aspect of the present disclosure has been made in view of the above circumstances, and an object of the present disclosure is to provide a working vehicle capable of improving convenience.

### SOLUTION TO PROBLEM

The problem to be solved by one aspect of the present disclosure is as described above, and means for solving the problem will be described below.

An aspect of the present disclosure includes a shift operation tool capable of performing a shift operation; a switching mechanism capable of switching between a stepped shift operation state in which the shift operation tool can be shifted stepwise and a continuously variable shift operation state in which the shift operation tool can be shifted steplessly; and a switching operation tool capable of performing an operation of switching a state of the switching mechanism.

According to one aspect of the present disclosure, convenience can be improved.

That is, since the stepwise shift operation (stepped shift) and the stepless shift operation (continuously variable shift) can be arbitrarily switched, a preferable operation method can be used according to the use of the working vehicle. This can improve convenience of the working vehicle.

In one aspect of the present disclosure, the switching mechanism includes an engaged portion provided in a vehicle body and having a plurality of recesses formed according to a shift position of the shift operation tool, and an engaging portion provided to be relatively movable with respect to the shift operation tool, and the switching operation tool is capable of switching the engaging portion between a position where the engaging portion can be engaged with the recesses and a position where the engaging portion cannot be engaged with the recesses.

According to one aspect of the present disclosure, the state can be switched to the stepped shift operation state by switching the position of the engaging portion. Furthermore, the stepped shift operation state can be realized with a relatively simple configuration.

In one aspect of the present disclosure, the switching mechanism includes a biasing portion that constantly biases the engaging portion toward the engaged portion.

According to one aspect of the present disclosure, switching to the stepped shift operation state can be smoothly performed by constantly biasing the engaging portion toward the engaged portion.

In one aspect of the present disclosure, the switching mechanism includes a link mechanism that interlockingly couples the switching operation tool and the engaging portion.

According to one aspect of the present disclosure, the switching mechanism can have a simple configuration.

In one aspect of the present disclosure, the switching mechanism includes a wire mechanism that interlockingly couples the switching operation tool and the engaging portion using a wire.

According to one aspect of the present disclosure, the switching mechanism can have a simple configuration.

In one aspect of the present disclosure, the switching mechanism includes a first contact portion provided in the vehicle body, and a second contact portion provided in the shift operation tool and capable of regulating an operation of the shift operation tool at any shift position by a frictional force between the shift operation tool and the first contact portion.

According to one aspect of the present disclosure, the continuously variable shift operation state can be realized using the frictional force between the first contact portion and the second contact portion. Furthermore, the state can be switched to the continuously variable shift operation state by switching the engaging portion to a position where the engaging portion cannot be engaged with the recesses (see claim 2).

In one aspect of the present disclosure, the engaged portion and the first contact portion are configured by a common member.

According to one aspect of the present disclosure, the configuration of the switching mechanism can be simplified.

In one aspect of the present disclosure, the switching operation tool and the shift operation tool are configured by a common member.

According to one aspect of the present disclosure, the configuration of the switching mechanism can be simplified.

In one aspect of the present disclosure, the switching operation tool includes a grip portion of the shift operation tool, and switches between the stepped shift operation state and the continuously variable shift operation state by rotating the grip portion.

According to one aspect of the present disclosure, the stepped shift operation state and the continuously variable shift operation state can be switched by a simple operation.

In one aspect of the present disclosure, the switching operation tool and the shift operation tool are configured by different members.

According to one aspect of the present disclosure, the stepped shift operation state and the continuously variable shift operation state can be switched by a member different from the shift operation tool.

### ADVANTAGEOUS EFFECTS OF INVENTION

According to one aspect of the present disclosure, convenience can be improved.

### BRIEF DESCRIPTION OF DRAWINGS

Fig. 1 is a left side view illustrating an overall configuration of a tractor according to one aspect of the present disclosure.
Fig. 2 is a left front perspective view illustrating a main part of the tractor.
Fig. 3 is a left rear perspective view illustrating a main shift lever, a switching mechanism, and the like in a stepped shift operation state.
Fig. 4 is a left rear perspective enlarged view illustrating an engaging portion, a supported portion, and the like.
Fig. 5(a) is a front view illustrating the engaging portion and the supported portion. Fig. 5(b) is a front cross-sectional view illustrating the supported portion.
Fig. 6 is a partial cross-sectional view of a left side surface illustrating the engaging portion and a groove.
Fig. 7(a) is a left side view illustrating a ball detent mechanism. Fig. 7(b) is a cross-sectional view of a left side surface illustrating the same.
Fig. 8 is a left rear perspective view illustrating a state in which the main shift lever is operated backward.
Fig. 9 is a left rear perspective view illustrating the main shift lever and the switching mechanism in the continuously variable shift operation state.
Fig. 10(a) is a partial cross-sectional view of a left side surface illustrating a support portion and the engagement portion in the stepped shift operation state. Fig. 10(b) is a partial cross-sectional view of a left side surface illustrating the support portion and the engaging portion in the continuously variable shift operation state.
Fig. 11 is a left rear perspective view illustrating a main shift lever and a switching mechanism in the stepped shift operation state in a tractor according to a second embodiment.
Fig. 12 is a left rear perspective view illustrating the main shift lever and the switching mechanism in the continuously variable shift operation state.
Fig. 13(a) is a right front perspective view illustrating a main shift lever and a switching mechanism in a tractor according to a third embodiment. Fig. 13(b) is a cross-sectional view illustrating an engaging portion and the like.
Fig. 14 is a side view illustrating an overall configuration of a tractor according to an embodiment of the present invention.
Fig. 15 is a plan view illustrating an interior of a cabin.
Fig. 16 is a side view illustrating a PTO clutch lever and a guide member.
Fig. 17 is a plan view of the same.
Fig. 18 is a partial cross-sectional view taken along line A-A.
Fig. 19 is a cross-sectional view taken along line B-B.
Fig. 20(a) is a partial cross-sectional plan view illustrating the PTO clutch lever, the guide member, and a regulation member. Fig. 20(b) is a plan view illustrating the regulation member.
Fig. 21 is a bottom view illustrating the PTO clutch lever, the guide member, and the regulation member.
Fig. 22 is an exploded perspective view illustrating the guide member and the regulation member.
Fig. 23 is a front view illustrating the regulation member.
Fig. 24 is a perspective view of the same.

### DESCRIPTION OF EMBODIMENTS

In the following description, directions indicated by arrows U, D, F, B, L, and R in the drawings are defined as an upward direction, a downward direction, a forward direction, a backward direction, a left direction, and a right direction, respectively.

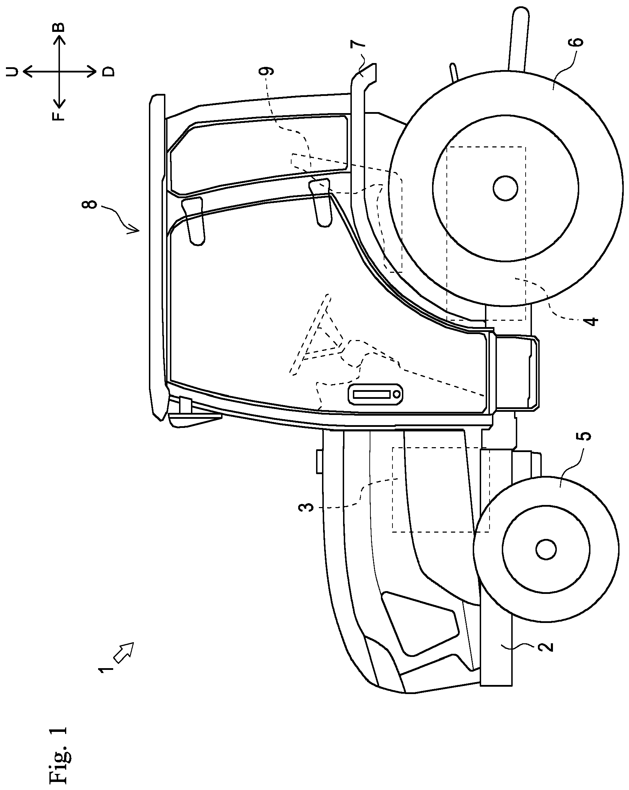

Hereinafter, a tractor 1 according to an embodiment of the present invention will be described with reference to Fig. 1.

The tractor 1 mainly includes a machine body frame 2, an engine 3, a transmission case 4, front wheels 5, rear wheels 6, a fender 7, a cabin 8, a seat 9, and the like.

The machine body frame 2 is a frame-shaped member formed by appropriately combining a plurality of panel members. The machine body frame 2 is formed in a substantially rectangular shape in plan view. The machine body frame 2 is provided in a front portion of the tractor 1 with its longitudinal direction oriented in a front-rear direction. The engine 3 is disposed in a rear portion of the machine body frame 2. The transmission case 4 is fixed to a rear portion of the engine 3.

A front portion of the machine body frame 2 is supported by a pair of the left and right front wheels 5 through a front axle mechanism (not illustrated). A rear portion of the transmission case 4 is supported by a pair of the left and right rear wheels 6 through a rear axle mechanism (not illustrated). The pair of left and right rear wheels 6 is covered with the fender 7 from substantially above.

A transmission shift device (not illustrated) is accommodated in the transmission case 4. As the transmission shift device, for example, a continuously variable transmission shift device capable of changing a transmission gear ratio steplessly, such as a hydro-static transmission (HST) or a continuously variable transmission (CVT), is used. Power of the engine 3 can be transmitted to the front wheels 5 through the front axle mechanism and can be transmitted to the rear wheels 6 through the rear axle mechanism after being shifted by a transmission shift device (not illustrated). The front wheels 5 and the rear wheels 6 are rotationally driven by the power of the engine 3, and the tractor 1 can travel.

The cabin 8 is provided behind the engine 3. Inside the cabin 8, a living space on which an operator boards is formed. The seat 9 on which the operator sits is disposed substantially at a center of the cabin 8.

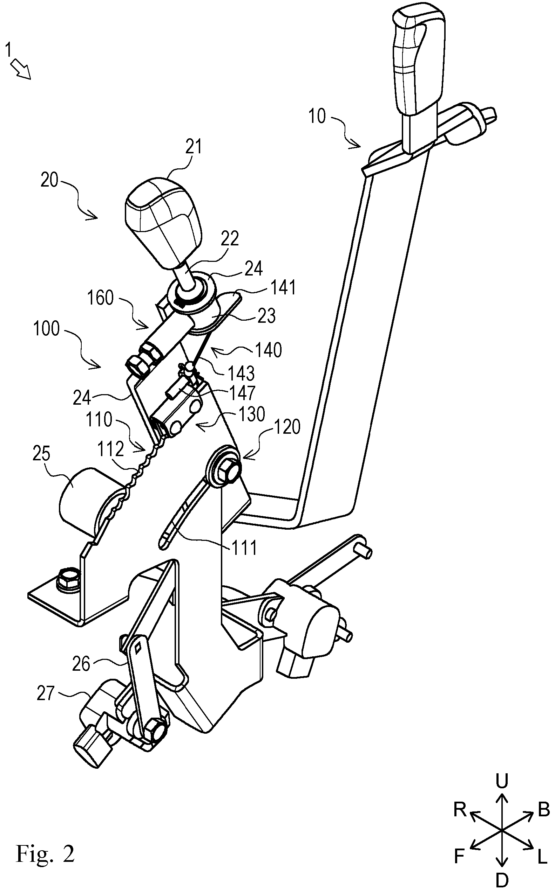

The cabin 8 is provided with various operation tools such as an auxiliary shift lever 10 and a main shift lever 20 illustrated in Fig. 2. The auxiliary shift lever 10 and the main shift lever 20 are provided in the vicinity of the fender 7 on the left side of the seat 9, and are configured to operate the transmission shift device. Furthermore, the tractor 1 includes a switching mechanism 100 (see Fig. 2 and the like) that switches the state of the main shift lever 20.

Hereinafter, the configuration of the main shift lever 20 will be described with reference to Figs. 2, 3, and 7.

The main shift lever 20 is used to perform a switching operation for forward/backward traveling and a changing operation for a traveling speed. The main shift lever 20 is operated back and forth to operate the transmission shift device, whereby the tractor 1 can be shifted in speed.

Furthermore, the main shift lever 20 can perform an operation of switching a state of a switching mechanism 100 described later. The main shift lever 20 is connected to the switching mechanism 100. The main shift lever 20 can switch the state of the switching mechanism 100 by rotating a grip portion 21 described later.

The main shift lever 20 mainly includes the grip portion 21, a grip portion rotation shaft 22, a cylindrical body 23, a lever main body 24, and a lever rotation shaft 25.

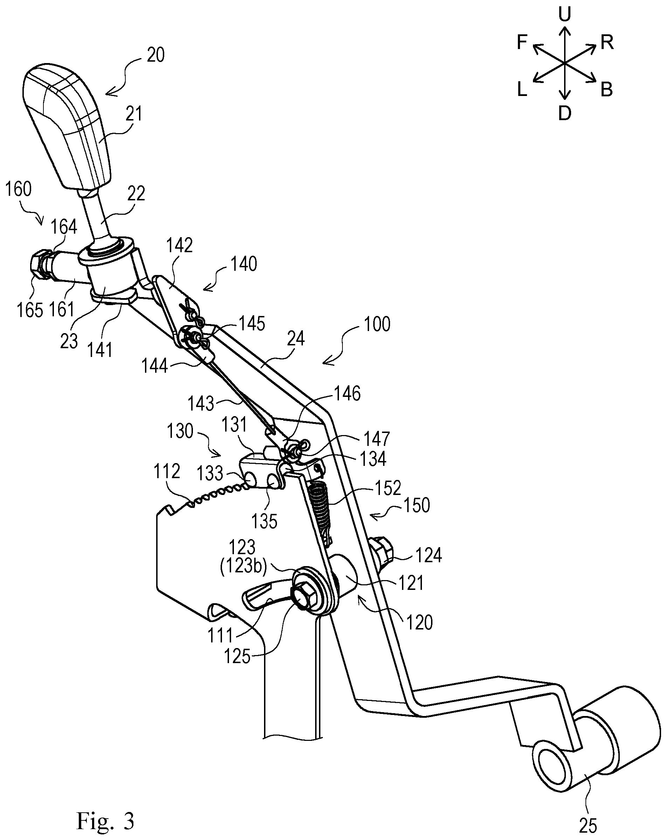

The grip portion 21 illustrated in Figs. 2 and 3 is a portion gripped when the operator operates the main shift lever 20. The grip portion 21 is formed in an appropriate shape that can be easily gripped by the operator.

The grip portion rotation shaft 22 illustrated in Figs. 2, 3, and 7 is for rotating the grip portion 21. The upper end of the grip portion rotation shaft 22 is fixed to the lower end of the grip portion 21, and is formed to extend substantially downward (rearward and downward) from the lower end of the grip portion 21. A recess 22a is formed in the grip portion rotation shaft 22.

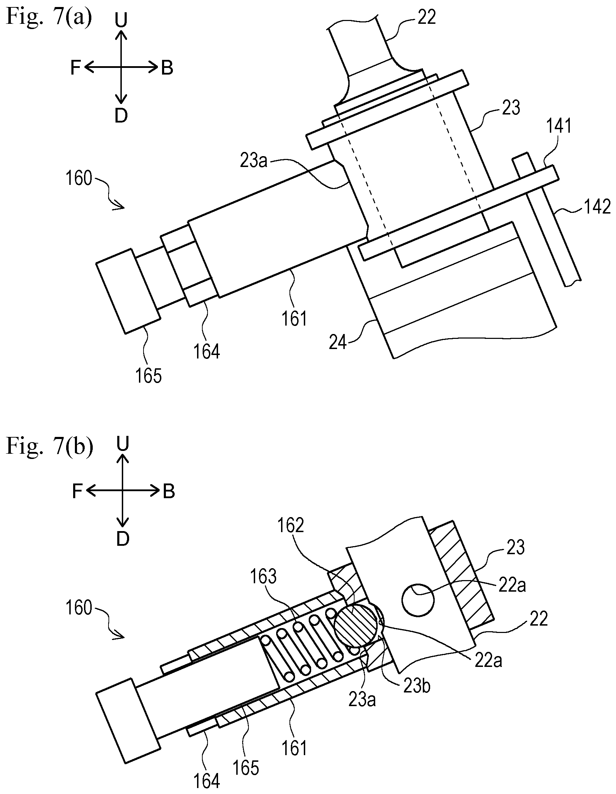

The recess 22a illustrated in Fig. 7(b) is formed such that the outer surface of the grip portion rotation shaft 22 is recessed. The recess 22a is formed in a shape corresponding to a ball 162 described later. Two recesses 22a are formed at intervals in a circumferential direction of the grip portion rotation shaft 22 according to a rotation position of the grip portion 21.

The cylindrical body 23 illustrated in Figs. 2, 3, and 7 is a member formed in a cylindrical shape. The cylindrical body 23 is provided such that the axis of the cylindrical body 23 coincides with the axis of the grip portion rotation shaft 22. The cylindrical body 23 is provided so that a part of the grip portion rotation shaft 22 is inserted therein. The cylindrical body 23 rotatably supports the grip portion rotation shaft 22 about the axis. A recess 23a and a through hole 23b are formed in the cylindrical body 23.

The recess 23a illustrated in Fig. 7 is formed such that a part (front portion) of the outer surface of the cylindrical body 23 is recessed. Although not illustrated, the recess 23a is formed in substantially the same shape as the outer shape of a cylindrical body 161 in substantially front view (as viewed in the axial direction of the cylindrical body 161 of a ball detent mechanism 160 described later).

The through hole 23b illustrated in Fig. 7(b) is a portion through which the ball 162 of the ball detent mechanism 160 described later is inserted. The through hole 23b is formed such that a portion of the side portion of the cylindrical body 23 where the recess 23a is formed penetrates in the radial direction. The through hole 23b is formed in substantially the same shape as the outer shape of the ball 162 of ball detent mechanism 160 in substantially front view (as viewed in the axial direction of the cylindrical body 161 of the ball detent mechanism 160 described later).

The lever main body 24 illustrated in Figs. 2 to 4 is a portion constituting a main structural body of the main shift lever 20. The lever main body 24 is formed such that the upper end portion of the lever main body 24 is fixed to the right portion of the cylindrical body 23 and extends rightward and downward while being appropriately bent from the right portion of the cylindrical body 23.

The lever rotation shaft 25 illustrated in Figs. 2 and 3 is for rotating the main shift lever 20. The lever rotation shaft 25 is fixed to the lower end of the lever main body 24 and is formed to extend rightward from the lower end of the lever main body 24. The lever rotation shaft 25 is rotatably supported by the vehicle body of the tractor 1.

The main shift lever 20 thus formed can rock back and forth about the lever rotation shaft 25. The main shift lever 20 is rocked back and forth to operate the transmission shift device, thereby shifting the speed of the tractor 1. More specifically, an operation amount of the main shift lever 20 is detected by a shift sensor 27 through a link mechanism 26 connected to the lower portion of the main shift lever 20 (see Fig. 2). An actuator (not illustrated) is operated according to the detected operation amount, and a transmission gear ratio of the transmission shift device is changed. As described above, in the present embodiment, the configuration in which the transmission gear ratio of the transmission shift device is electrically controlled on the basis of the operation of the main shift lever 20 is exemplified, but the present invention is not limited thereto, and can also be applied to a configuration in which the main shift lever 20 and the transmission shift device are mechanically coupled to change the transmission gear ratio.

Next, the configuration of the switching mechanism 100 will be described with reference to Figs. 2 to 7 and the like.

The switching mechanism 100 can switch the main shift lever 20 between the stepped shift operation state and the continuously variable shift operation state. Details of the stepped shift operation state and the continuously variable shift operation state will be described later.

The switching mechanism 100 mainly includes a support portion 110, a supported portion 120, an engaging portion 130, a wire mechanism 140, a biasing portion 150, and the ball detent mechanism 160.

The support portion 110 illustrated in Figs. 2 to 4 and 6 is a portion that supports the main shift lever 20 and the like. The support portion 110 is provided in the vehicle body of the tractor 1. The support portion 110 is formed in a plate shape with a plate surface facing the left-right direction. The support portion 110 is provided on the left side of a vertically middle portion of the main shift lever 20. The upper end of the support portion 110 is formed in an arc shape centered on the axis of the lever rotation shaft 25 in side view. An insertion hole 111 and a groove 112 are formed in the support portion 110.

The insertion hole 111 illustrated in Figs. 2 to 4 is a portion through which the supported portion 120 to be described later is inserted. The insertion hole 111 is formed near the center of the support portion 110. The insertion hole 111 is formed in an arc shape centered on the axis of the lever rotation shaft 25 in side view. As a result, the insertion hole 111 is formed in an arc shape concentric with the upper end of the support portion 110 in side view.

The groove 112 illustrated in Figs. 2 to 4 and 6 is a portion with which the engaging portion 130 (second spacer 134) described later is engaged. The groove 112 is formed such that an upper end of the support portion 110 is recessed substantially downward. The groove 112 is formed in a substantially arc shape in side view. A plurality of the grooves 112 is formed according to the shift position of the main shift lever 20 so as to be continuously arranged along the upper end of the support portion 110.

The supported portion 120 illustrated in Figs. 2 to 5 is a portion provided in the main shift lever 20 and supported by the support portion 110. The supported portion 120 includes a collar 121, a spring 122, a friction plate 123, a nut 124, and a bolt 125.

The collar 121 illustrated in Figs. 3 to 5 is formed in a cylindrical shape. The collar 121 is fitted and fixed to a through hole provided in a vertically middle portion of the lever main body 24 with the axis thereof oriented in the left-right direction. The collar 121 is provided so as to protrude to the left side and the right side of the lever main body 24.

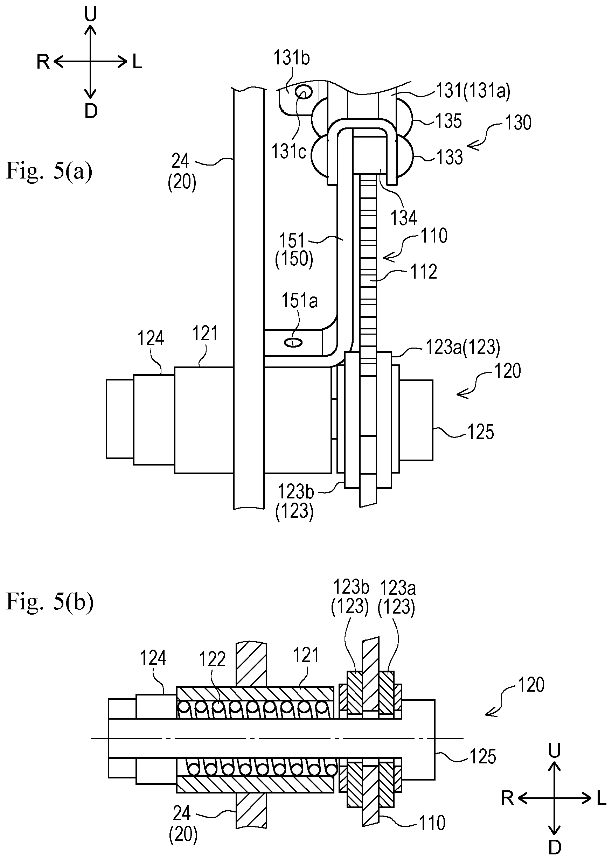

The spring 122 illustrated in Fig. 5(b) generates a biasing force, and is, for example, a compression coil spring. The spring 122 is disposed inside the collar 121 with its expansion and contraction direction oriented in an axial direction of the collar 121.

The friction plate 123 illustrated in Figs. 3 to 5 generates a frictional force with the support portion 110. The friction plate 123 is formed in the shape of an annular plate. The friction plates 123 are provided on the left side and the right side of the support portion 110 with the plate surfaces facing the left-right direction. Hereinafter, the friction plate 123 provided on the left side of the support portion 110 may be referred to as a friction plate 123a, and the friction plate 123 provided on the right side of the support portion 110 may be referred to as a friction plate 123b.

The friction plate 123a is provided such that its right surface is in contact with the left surface of the support portion 110. The friction plate 123b is provided such that its left surface is in contact with the right surface of the support portion 110. The friction plate 123 is disposed such that the center of the friction plate 123 substantially coincides with the axis of the collar 121 in side view.

The nut 124 illustrated in Figs. 3 to 5 is provided on the right side of the collar 121. The nut 124 is disposed such that its axial direction substantially coincides with the axis of the collar 121.

The bolt 125 illustrated in Figs. 3 to 5 is inserted into the collar 121 (spring 122) from the left side of the friction plate 123a and is fastened to the nut 124. As a result, the spring 122 is disposed inside the collar 121 in a compressed state. Due to the biasing force of the spring 122 and the fastening force of the bolt 125, the friction plate 123a and the friction plate 123b are pressed against the support portion 110.

The supported portion 120 configured as described above can hold the main shift lever 20 at any shift position by the frictional force between the friction plate 123 and the support portion 110. As a result, the supported portion 120 can regulate the operation of the main shift lever 20 at any shift position.

The engaging portion 130 illustrated in Figs. 2 to 6 engages with the groove 112 of the support portion 110. The engaging portion 130 is provided above the support portion 110. The engaging portion 130 is connected to the main shift lever 20 through a spring attachment portion 151 described later. Accordingly, the engaging portion 130 can move along the upper end of the support portion 110 (in an arc shape about the axis of the lever rotation shaft 25) along with the front-rear rocking of the main shift lever 20.

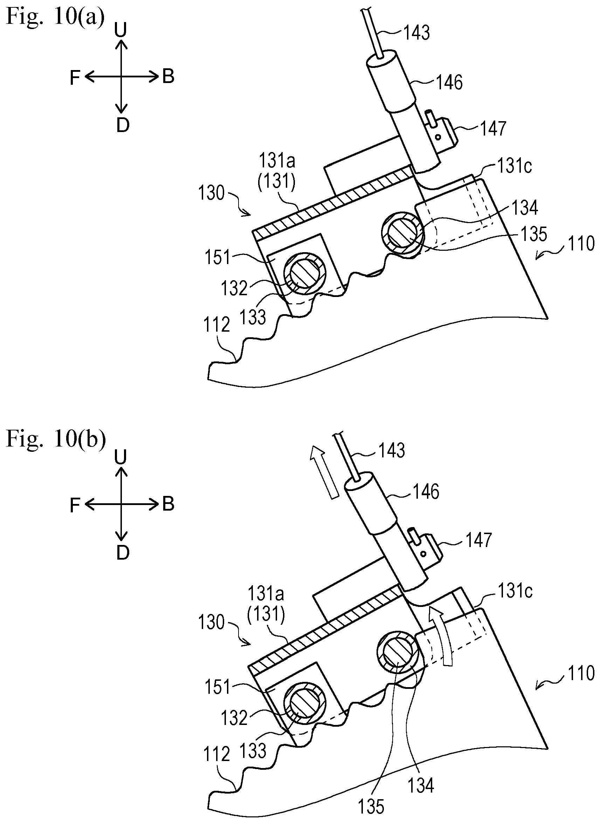

Furthermore, the engaging portion 130 is provided to be relatively movable with respect to the main shift lever 20 by the operation of the wire mechanism 140 described later. Specifically, the engaging portion 130 is provided to be movable between a position where the engaging portion can engage with the groove 112 (see Fig. 10(a)) and a position where the engaging portion cannot engage with the groove 112 (see Fig. 10(b)). The engaging portion 130 includes a plate 131, a first spacer 132, a first rivet 133, a second spacer 134, and a second rivet 135.

The plate 131 illustrated in Figs. 3 to 6 constitutes a main structural body of the engaging portion 130. The plate 131 includes a main body 131a and a spring attachment portion 131b.

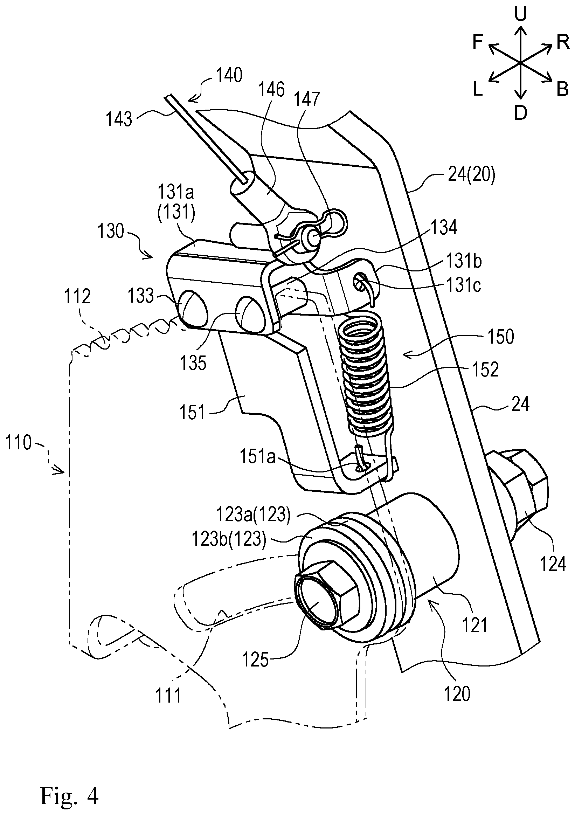

The main body 131a illustrated in Figs. 4 to 6 is a portion that supports the first spacer 132 and the second spacer 134 described later. The main body 131a is formed in a substantially U shape in front view with the open side facing substantially downward.

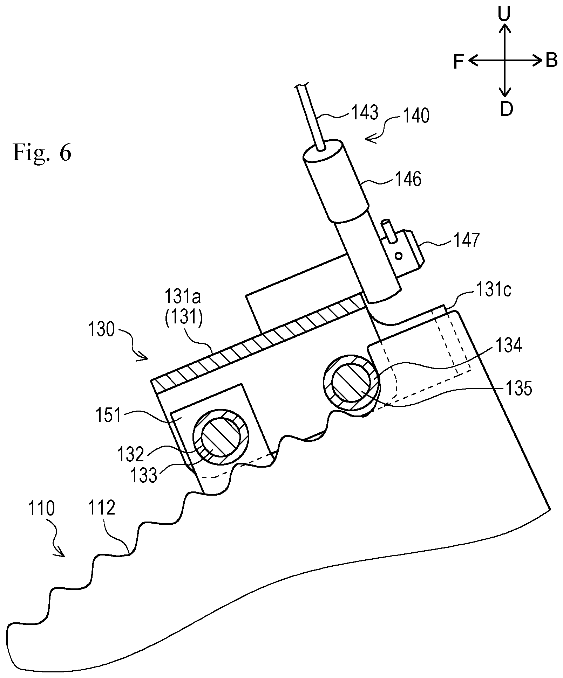

The spring attachment portion 131b illustrated in Figs. 4 and 6 is a portion connected to a spring 152 to be described later. Note that, in Fig. 5(a), the spring 152 is not illustrated. The spring attachment portion 131b is provided at the rear end of the main body 131a. An attachment hole 131c with which the upper end of the spring 152 is engaged is formed in the spring attachment portion 131b (see Figs. 4 and 5(a)).

The first spacer 132 illustrated in Fig. 6 is a member formed in a cylindrical shape. The first spacer 132 is disposed on the front inner side of the main body 131a with the axis thereof oriented in the left-right direction. The first spacer 132 is fixed to the main body 131a by the first rivet 133.

The second spacer 134 illustrated in Figs. 3 to 6 is a member formed in a cylindrical shape. The second spacer 134 is disposed inside the rear portion of the main body 131a with the axis thereof oriented in the left-right direction. The second spacer 134 is provided behind (behind and above) the first spacer 132. The second spacer 134 is fixed to the main body 131a by the second rivet 135. An outer diameter of the second spacer 134 is formed to be engageable with the groove 112 of the support portion 110.

The wire mechanism 140 illustrated in Figs. 2 to 4 and 6 interlocks and couples the main shift lever 20 and the engaging portion 130 using a wire 143. The wire mechanism 140 includes a first rotation plate 141, a second rotation plate 142, the wire 143, a first attachment portion 144, a first pin 145, a second attachment portion 146, and a second pin 147.

The first rotation plate 141 illustrated in Figs. 2 and 3 is provided at the lower end of the grip portion rotation shaft 22 of the main shift lever 20, and rotates integrally with the grip portion rotation shaft 22. The first rotation plate 141 is formed below the cylindrical body 23 of the main shift lever 20. The first rotation plate 141 is formed so as to extend substantially rearward from the lower end of the grip portion rotation shaft 22 with the plate surface facing the axial direction of the grip portion rotation shaft 22.

The second rotation plate 142 illustrated in Fig. 3 is provided on the lever main body 24 of the main shift lever 20 so as to be rockable leftward and rightward with the plate surface facing substantially the front-rear direction. The second rotation plate 142 is provided on the right side of the first rotation plate 141. More specifically, the second rotation plate 142 is provided at a position where an upper end portion of the second rotation plate 142 can be pressed by the first rotation plate 141 when the first rotation plate 141 rotates rightward (see Fig. 7(a)).

The wire 143 illustrated in Figs. 2 to 4 and 6 is provided so as to couple the second rotation plate 142 and the engaging portion 130. The wire 143 is formed of a material having flexibility. The first attachment portion 144 is connected to the upper end of the wire 143 (see Fig. 3). By inserting and fixing the first pin 145 into the second rotation plate 142 and the first attachment portion 144, the upper end of the wire 143 is connected to the lower portion of the second rotation plate 142. The second attachment portion 146 is connected to the lower end of the wire 143 (see Figs. 3 and 4). The lower end of the wire 143 is connected to the rear portion of the engaging portion 130 by inserting the second attachment portion 146 into the second pin 147 fixed to the upper surface of the main body 131a of the engaging portion 130.

The biasing portion 150 illustrated in Figs. 3 to 5 constantly biases the engaging portion 130 toward the support portion 110. The biasing portion 150 includes the spring attachment portion 151 and the spring 152.

The spring attachment portion 151 illustrated in Figs. 4, 5(a), and 6 is for attaching the spring 152 to be described later. The spring attachment portion 151 is formed in a substantially L shape in front view. As illustrated in Fig. 4, the lower end of the spring attachment portion 151 is fixed to the left surface of the lever main body 24 by welding or the like. As illustrated in Figs. 5(a) and 6, the upper end of the spring attachment portion 151 is fastened to the plate 131 together with the first spacer 132 by the first rivet 133. In this manner, the spring attachment portion 151 connects the engaging portion 130 to the main shift lever 20.

The spring 152 illustrated in Figs. 3 and 4 biases the engaging portion 130 substantially downward. The spring 152 is, for example, a tension coil spring. As illustrated in Fig. 4, the upper end of the spring 152 is engaged with the attachment hole 131c of the spring attachment portion 131b of the engaging portion 130. The lower end of the spring 152 is engaged with an attachment hole 151a of the spring attachment portion 151.

By providing the biasing portion 150 configured as described above, the rear portion of the engaging portion 130 is biased substantially downward by the spring 152. As a result, the second spacer 134 of the engaging portion 130 is engaged with the groove 112 of the support portion 110.

The ball detent mechanism 160 illustrated in Figs. 2, 3, and 7 holds the grip portion rotation shaft 22 of the main shift lever 20 at a predetermined rotation position. The ball detent mechanism 160 is provided in front of the cylindrical body 23 of the main shift lever 20. The ball detent mechanism 160 includes the cylindrical body 161, a ball 162, a spring 163, a nut 164, and a bolt 165.

The cylindrical body 161 illustrated in Figs. 3 and 7 is a member formed in a cylindrical shape. The cylindrical body 161 is disposed such that the axis of the cylindrical body 161 is perpendicular to the axis of the grip portion rotation shaft 22. The rear end portion of the cylindrical body 161 is fitted into the recess 23a of the cylindrical body 23 of the main shift lever 20.

The ball 162 illustrated in Fig. 7(b) is a member formed in a spherical shape. The ball 162 is accommodated in the through hole 23b of the cylindrical body 23 of the main shift lever 20 inside the cylindrical body 161.

The spring 163 illustrated in Fig. 7(b) biases the ball 162 toward the grip portion rotation shaft 22. The spring 163 is, for example, a compression coil spring. The spring 163 is disposed inside the cylindrical body 161 such that its expanding and contracting direction is oriented in an axial direction of the cylindrical body 161 (a direction perpendicular to the axis of grip portion rotation shaft 22). The spring 163 is disposed substantially in front of the ball 162.

The nut 164 illustrated in Figs. 3 and 7 is fixed to the front end portion of the cylindrical body 161 such that the axis of the nut 164 coincides with the axis of the cylindrical body 161.

The bolt 165 illustrated in Figs. 3 and 7 is fastened to the nut 164 from substantially the front of the nut 164. Furthermore, a part (front portion) of the bolt 165 is inserted into the cylindrical body 161. As a result, the spring 163 is held in the cylindrical body 161 in a compressed state.

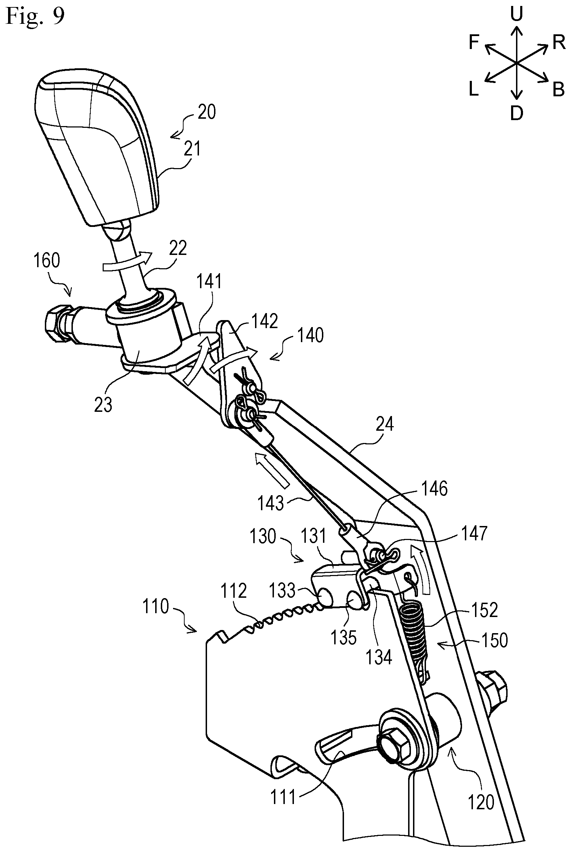

By configuring the ball detent mechanism 160 in this manner, the ball 162 is pressed against the grip portion rotation shaft 22 by the biasing force of the spring 163. When the grip portion 21 (the grip portion rotation shaft 22) is located at the rotation position illustrated in Fig. 3, the ball 162 fits into the one recess 22a of the grip portion rotation shaft 22. Furthermore, when the grip portion 21 (the grip portion rotation shaft 22) is located at the rotation position illustrated in Fig. 9, the ball 162 fits into the other recess 22a of the grip portion rotation shaft 22. In this manner, the ball detent mechanism 160 can hold the grip portion 21 (the grip portion rotation shaft 22) in the two rotation positions (Figs. 3 and 9).

Hereinafter, the stepped shift operation state and the continuously variable shift operation state will be described. The stepped shift operation state means a state in which the main shift lever 20 can be shifted stepwise. Furthermore, the continuously variable shift operation state means a state in which the main shift lever 20 can be shifted steplessly.

In the stepped shift operation state, a second spacer 132a of the engaging portion 130 is engaged with one of the plurality of grooves 112 (see Fig. 10(a)). On the other hand, in the continuously variable shift operation state, the second spacer 132a of the engaging portion 130 is not engaged with any of the plurality of grooves 112 (see Fig. 10(b)). Accordingly, in the stepped shift operation state, the main shift lever 20 can be shifted stepwise. Furthermore, in the continuously variable shift operation state, the main shift lever 20 can be shifted steplessly.

Hereinafter, the operations of the main shift lever 20 and the switching mechanism 100 when the main shift lever 20 is switched from the stepped shift operation state to the continuously variable shift operation state will be described with reference to Figs. 3, 9, and 10.

First, the operator rotates the grip portion 21 counterclockwise in plan view to change the state illustrated in Fig. 3 to the state illustrated in Fig. 9. The grip portion 21 is held at a position illustrated in Fig. 9 by the ball detent mechanism 160 even when the operator releases the hand from the grip portion 21.

As illustrated in Fig. 9, when the grip portion 21 is rotated in the counterclockwise direction in plan view, the first rotation plate 141 rotates in the counterclockwise direction in plan view together with the grip portion rotation shaft 22 to press the second rotation plate 142 rightward. As a result, the second rotation plate 142 rotates in the clockwise direction in rear view.

As illustrated in Fig. 9, when the second rotation plate 142 rotates in the clockwise direction in rear view, a lower portion of the second rotation plate 142 moves upward. Then, the wire 143 fixed to the lower portion of the second rotation plate 142 is pulled upward.

As a result, an upward force is applied to the rear portion of the engaging portion 130. Here, the first spacer 132 is fixed to the lever main body 24. Therefore, as illustrated in Fig. 10(b), the engaging portion 130 rotates counterclockwise in left side view about the axis of the first spacer 132 against the biasing force of the spring 152, and the second spacer 134 moves upward.

As a result, the second spacer 134 of the engaging portion 130 is separated from the groove 112 and is not engaged with the groove 112. At this time, the grip portion 21 is held at a predetermined rotation position by the ball detent mechanism 160, so that the engaging portion 130 is held at a position not engaged with the groove 112.

In this way, the main shift lever 20 can be switched from the stepped shift operation state illustrated in Fig. 10(a) to the continuously variable shift operation state illustrated in Fig. 10(b).

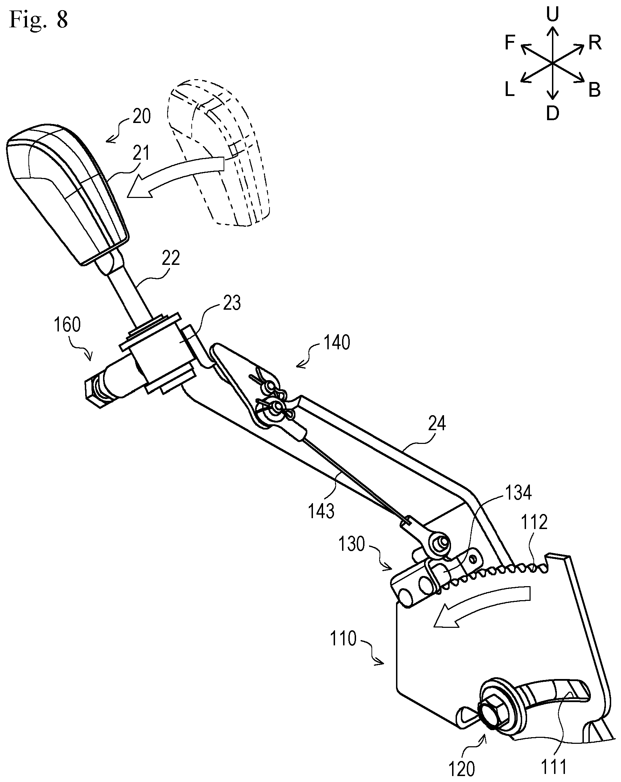

When the shift operation is performed in the continuously variable shift operation state, the main shift lever 20 is rocked back and forth about the lever rotation shaft 25 (see Fig. 8). In the continuously variable shift operation state, since the second spacer 134 of the engaging portion 130 is not engaged with the groove 112, the main shift lever 20 can be stopped at any position. The main shift lever 20 is held at any stop position by the frictional force of the friction plate 123 with the support portion 110. In this way, the stop position of the main shift lever 20 is changed, and the shift operation of the tractor 1 can be performed.

On the other hand, when the main shift lever 20 is switched from the continuously variable shift operation state to the stepped shift operation state, the operator rotates the grip portion 21 in the clockwise direction in plan view to change the state illustrated in Fig. 9 to the state illustrated in Fig. 3. The grip portion 21 is held at the position illustrated in Fig. 3 by the ball detent mechanism 160 even when the operator releases the hand from the grip portion 21.

When the grip portion 21 is rotated in the clockwise direction in plan view, the first rotation plate 141 rotates in the clockwise direction in plan view together with the grip portion rotation shaft 22, and the pressing of the second rotation plate 142 to the right is released. Then, the engaging portion 130 rotates in the clockwise direction in the left side view about the axis of the first spacer 132 by the downward biasing force of the spring 152 with respect to the rear portion of the engaging portion 130, and the second spacer 134 moves downward.

As a result, the second spacer 134 of the engaging portion 130 comes close to the groove 112 and is engaged with the groove 112. As a result, the engaging portion 130 is held at a position to be engaged with the groove 112 illustrated in Fig. 10(a).

In this way, the main shift lever 20 can be switched from the continuously variable shift operation state illustrated in Fig. 10(b) to the stepped shift operation state illustrated in Fig. 10(a).

When the shift operation is performed in the stepped shift operation state, the main shift lever 20 is rocked back and forth about the lever rotation shaft 25 (see Fig. 8). In the stepped shift operation state, the second spacer 134 of the engaging portion 130 is engaged with the groove 112. However, when the main shift lever 20 is operated, the second spacer 134 gets over the groove 112 against the biasing force of the spring 152 substantially downward. When the main shift lever 20 is not operated, the second spacer 134 is engaged with any one of the grooves 112 by the substantially downward biasing force of the spring 152. Therefore, the stop position of the main shift lever 20 is determined in stages according to the groove 112. In this way, the stop position of the main shift lever 20 is changed, and the shift operation of the tractor 1 can be performed.

As described above, in the tractor 1 according to the present embodiment, since the stepped shift operation state and the continuously variable shift operation state can be arbitrarily switched, a preferable operation method can be used according to the application. This can improve convenience of the tractor 1.

For example, in the tractor 1, an appropriate working vehicle speed is determined for each attached implement. Therefore, it is desirable to perform the same work at the same vehicle speed. Therefore, by switching the switching mechanism 100 to the stepped shift operation state, it is possible to easily set the vehicle speed to a determined vehicle speed.

On the other hand, in a case where fine adjustment of the vehicle speed is required, the switching mechanism 100 can be switched to the continuously variable shift operation state. This makes it possible to perform a sensuous and smooth operation and to finely adjust the speed.

Furthermore, since the engaging portion 130 is constantly biased toward the groove 112 by the biasing portion 150, it is possible to smoothly switch to the stepped shift operation state.

Furthermore, since the member in which the groove 112 is formed and the member with which the friction plate 123 is in contact are configured by a common member (support portion 110), the configuration of the switching mechanism 100 can be simplified.

Furthermore, since the member for performing the operation of switching the state of the switching mechanism 100 and the member for performing the shift operation are configured by the common member (the main shift lever 20), the configuration of the switching mechanism 100 can be simplified.

Furthermore, since the stepped shift operation state and the continuously variable shift operation state can be switched by rotating the grip portion 21, the switching operation can be performed by a simple operation.

As described above, the tractor 1 according to the present embodiment includes:
the main shift lever 20 (shift operation tool) capable of performing a shift operation;
the switching mechanism 100 capable of switching between a stepped shift operation state in which the main shift lever 20 can be shifted stepwise and a continuously variable shift operation state in which the main shift lever 20 can be shifted steplessly; and
the main shift lever 20 (switching operation tool) capable of performing an operation of switching the state of the switching mechanism 100.

With this configuration, convenience can be improved.

That is, since the stepwise shift operation (stepped shift) and the stepless shift operation (continuously variable shift) can be arbitrarily switched, a preferable operation method can be used according to the use of the working vehicle. This can improve convenience of the working vehicle.

Furthermore, the switching mechanism 100 includes:
the support portion 110 (engaged portion) provided in a vehicle body and having a plurality of grooves 112 (recesses) formed according to a shift position of the main shift lever 20 (shift operation tool), and
the engaging portion 130 provided to be relatively movable with respect to the main shift lever 20, and
the main shift lever 20 (switching operation tool) can switch the engaging portion 130 between a position where the engagement portion can be engaged with the groove 112 and a position where the engagement portion cannot be engaged with the groove 112.

With such a configuration, it is possible to switch to the stepped shift operation state by switching the position of the engaging portion 130. Furthermore, the stepped shift operation state can be realized with a relatively simple configuration.

Furthermore, the switching mechanism 100 includes the biasing portion 150 that constantly biases the engaging portion 130 toward the support portion 110 (engaged portion).

With such a configuration, it is possible to smoothly switch to the stepped shift operation state by constantly energizing the engaging portion 130 toward the support portion 110.

Furthermore, the switching mechanism 100 includes the wire mechanism 140 that interlockingly couples the main shift lever 20 (switching operation tool) and the engaging portion 130 using the wire 143.

With such a configuration, the switching mechanism 100 can have a comparatively simple configuration.

Furthermore, the switching mechanism 100 includes:
the support portion 110 (first contact portion) provided in the vehicle body; and
the supported portion 120 (second contact portion) provided in the main shift lever 20 (shift operation tool) and capable of regulating the operation of the main shift lever 20 at any shift position by a frictional force between the main shift lever 20 and the support portion 110.

With such a configuration, the continuously variable shift operation state can be realized using the frictional force between the support portion 110 (first contact portion) and the supported portion 120 (second contact portion). Furthermore, the state can be switched to the continuously variable shift operation state by switching the engaging portion 130 to a position where the engaging portion cannot be engaged with the groove 112.

Furthermore, the engaged portion and the first contact portion are configured by a common member (support portion 110).

With such a configuration, the configuration of the switching mechanism 100 can be simplified.

Furthermore, the switching operation tool and the shift operation tool are configured by a common member (main shift lever 20).

With such a configuration, the configuration of the switching mechanism 100 can be simplified.

Furthermore, the main shift lever 20 (switching operation tool) includes the grip portion 21 of the main shift lever 20 (shift operation tool), and switches between the stepped shift operation state and the continuously variable shift operation state by rotating the grip portion 21.

With this configuration, the stepped shift operation state and the continuously variable shift operation state can be switched by a simple operation.

Note that the tractor 1 according to the present embodiment is an embodiment of the working vehicle according to the present invention.

Furthermore, the main shift lever 20 according to the present embodiment is an embodiment of the shift operation tool and the switching operation tool according to the present invention.

Furthermore, the support portion 110 according to the present embodiment is an embodiment of the first contact portion according to the present invention.

Furthermore, the supported portion 120 according to the present embodiment is an embodiment of the second contact portion according to the present invention.

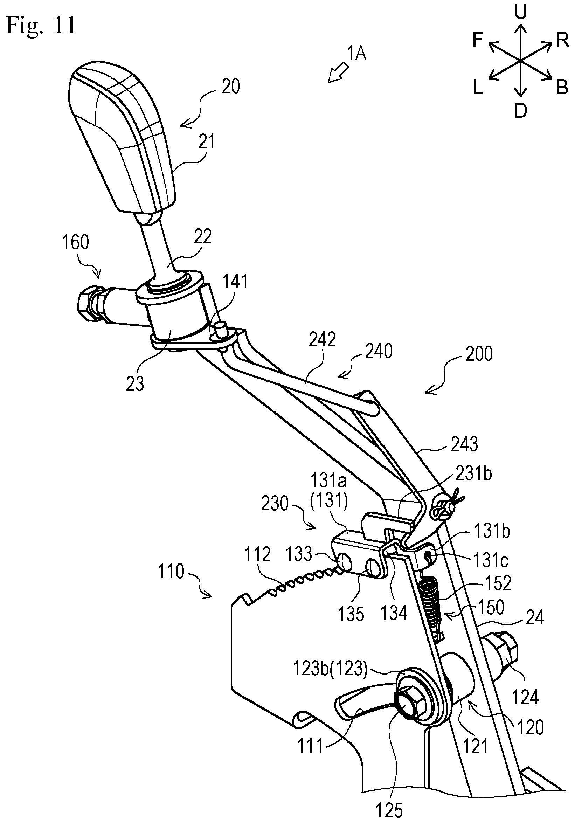

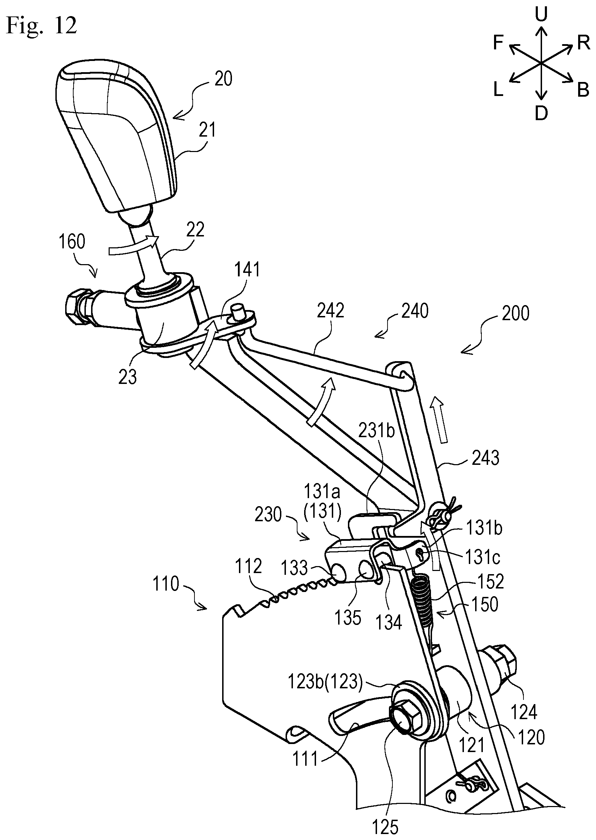

A tractor 1A according to a second embodiment will be described below with reference to Figs. 11 and 12.

The tractor 1A according to the second embodiment is different from the tractor 1 according to the first embodiment in that a switching mechanism 200 is provided instead of the switching mechanism 100. Furthermore, the switching mechanism 200 is different from the switching mechanism 100 in that an engaging portion 230 is provided instead of the engaging portion 130, and a link mechanism 240 is provided instead of the wire mechanism 140. Therefore, in the following description, the same configurations as those of the first embodiment are denoted by the same reference signs, and description thereof is omitted.

The engaging portion 230 engages with a groove 112 of a support portion 110. The engaging portion 230 is different from the engaging portion 130 of the first embodiment in that a link engaging portion 231b is further provided. Therefore, in the following description, the same configurations as those of the engaging portion 130 of the first embodiment are denoted by the same reference signs, and description thereof is omitted.

The link engaging portion 231b is a portion connected to the link mechanism 240 described later. The link engaging portion 231b is fixed to an upper rear side of a main body 131a. The link engaging portion 231b is formed in a substantially L shape in side view. The link engaging portion 231b is formed to extend substantially upward from the upper portion of the main body 131a and to bend and extend substantially rearward.

The link mechanism 240 interlocks and couples a main shift lever 20 and the engaging portion 230. The link mechanism 240 includes a first rotation plate 141, a rod 242, and an arm 243. Since the first rotation plate 141 is the same as that of the first embodiment, the description thereof is omitted.

The rod 242 is provided so as to couple the first rotation plate 141 and the arm 243 to be described later. The rod 242 is formed in a longitudinal rod shape having no flexibility. The upper end of the rod 242 is inserted through the distal end (radially outside) of the first rotation plate 141. The rod 242 is formed so as to extend substantially downward to the right from the distal end of the first rotation plate 141 while being appropriately bent. The lower end of the rod 242 is formed to extend to the right and above the link engaging portion 231b.

The arm 243 is provided in a lever main body 24 of the main shift lever 20 so as to be rockable to the left and right with the plate surface of the arm facing substantially the front-rear direction. The arm 243 is formed in a substantially L-shaped plate shape. The lower end of the rod 242 is inserted through the upper end of the arm 243. The arm 243 is formed to extend substantially downward from the lower end of the rod 242 and to bend and extend substantially leftward. The left end of the arm 243 is formed to extend below the link engaging portion 231b.

Hereinafter, the operations of the main shift lever 20 and the switching mechanism 200 when the main shift lever 20 is switched from the stepped shift operation state to the continuously variable shift operation state will be described with reference to Figs. 11 and 12.

First, the operator rotates a grip portion 21 counterclockwise in plan view to change the state illustrated in Fig. 11 to the state illustrated in Fig. 12. The grip portion 21 is held at a position illustrated in Fig. 12 by a ball detent mechanism 160 even when the operator releases the hand from the grip portion 21.

As illustrated in Fig. 12, when the grip portion 21 is rotated in the counterclockwise direction in plan view, the first rotation plate 141 rotates in the counterclockwise direction in plan view together with a grip portion rotation shaft 22. Then, since a distance between the distal end of the first rotation plate 141 and the rotation center of the arm 243 becomes short, the arm 243 rotates clockwise in rear view, and the left end of the arm 243 is lifted upward. The link engaging portion 231b is lifted upward by the left end of the arm 243.

As a result, an upward force is applied to the rear portion of the engaging portion 130. Here, a first spacer 132 is fixed to the lever main body 24 through a spring attachment portion 151. Therefore, the engaging portion 130 rotates counterclockwise in the left side view about the axis of the first spacer 132 against the biasing force of a spring 152, and a second spacer 134 moves upward (see Fig. 10(b)).

As a result, the second spacer 134 of the engaging portion 130 is separated from the groove 112 and is not engaged with the groove 112. At this time, the grip portion 21 is held at a predetermined rotation position by the ball detent mechanism 160, so that the engaging portion 130 is held at a position not engaged with the groove 112.

In this way, the main shift lever 20 can be switched from the stepped shift operation state to the continuously variable shift operation state.

As described above, the switching mechanism 200 includes the link mechanism 240 that interlocks and couples the main shift lever 20 and the engaging portion 230.

With such a configuration, the switching mechanism 200 can have a comparatively simple configuration.

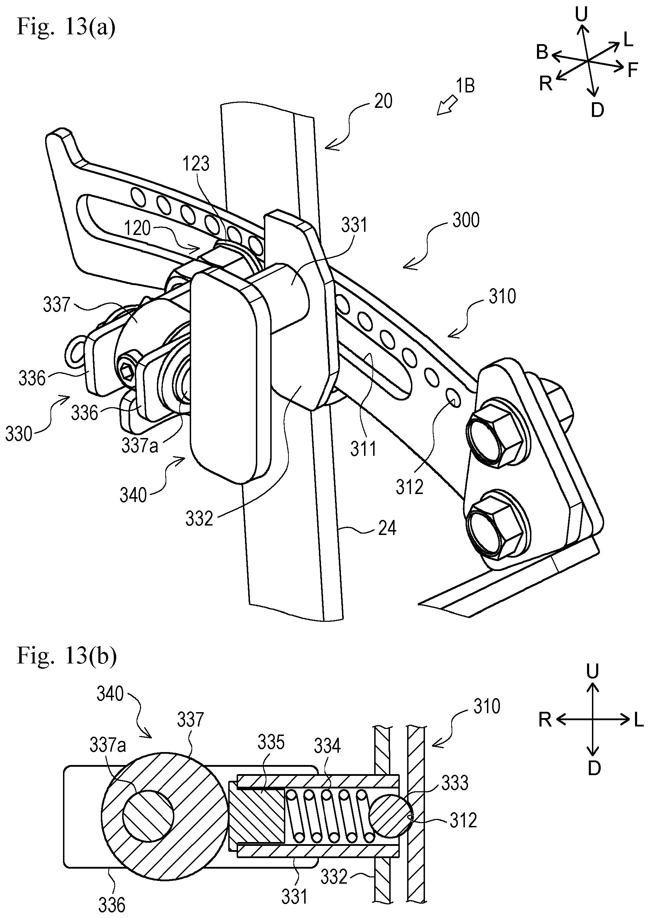

A tractor 1B according to a third embodiment will be described below with reference to Fig. 13.

The tractor 1B according to the third embodiment is different from the tractor 1 according to the first embodiment in that a switching mechanism 300 is provided instead of the switching mechanism 100. Therefore, in the following description, the same configurations as those of the first embodiment are denoted by the same reference signs, and description thereof is omitted.

The switching mechanism 300 includes a support portion 310, a supported portion 120, an engaging portion 330, and a switching operation tool 340. The supported portion 120 is the same as that of the first embodiment, and thus description thereof is omitted.

The support portion 310 is a portion that supports a main shift lever 20 and the like. The support portion 310 is provided on a vehicle body of the tractor 1. The support portion 310 is formed in a plate shape with a plate surface thereof facing the left-right direction. The support portion 310 is provided on the right side of a vertically middle portion of a main shift lever 20. An insertion hole 311 and a recess 312 are formed in the support portion 310.

The insertion hole 311 is a portion through which the supported portion 120 is inserted. The insertion hole 311 is formed near the center of the support portion 310. The insertion hole 311 is formed in an arc shape centered on the axis of a lever rotation shaft 25 (see Figs. 2 and 3) in side view.

The recess 312 is a portion with which the engaging portion 330 (a ball 333) described later is engaged. The recess 312 is formed such that a right surface of the support portion 310 is recessed. The recess 312 is formed in a shape corresponding to the ball 333 described later. A plurality of the recesses 312 is formed along an arc (arc concentric with the insertion hole 311) centered on the axis of the lever rotation shaft 25 in side view according to the shift position of the main shift lever 20.

The engaging portion 330 engages with the recess 312 of the support portion 310. The engaging portion 330 is provided on the right side of the support portion 310. The engaging portion 330 includes a cylindrical body 331, a fixing portion 332, the ball 333, a spring 334, a moving body 335, a support plate 336, and a roller 337.

The cylindrical body 331 is a member formed in a cylindrical shape. The cylindrical body 331 is disposed with the axis of the cylindrical body 331 oriented in the left-right direction.

The fixing portion 332 fixes the cylindrical body 331 to a lever main body 24 of the main shift lever 20. The fixing portion 332 is formed in a substantially L shape in front view and is provided such that a lower end thereof is bent substantially leftward. The lower end of the fixing portion 332 is fixed to the lever main body 24. The left portion of the cylindrical body 331 is fitted to the vertically middle portion of the fixing portion 332.

The ball 333 illustrated in Fig. 13(b) is a member formed in a spherical shape. The ball 333 is provided inside the cylindrical body 331.

The spring 334 illustrated in Fig. 13(b) biases the ball 333 toward the support portion 310. The spring 334 is, for example, a compression coil spring. The spring 334 is disposed inside the cylindrical body 331 with its expansion and contraction direction oriented in an axial direction of the cylindrical body 331. The spring 334 is disposed to the right of the ball 333.

The moving body 335 illustrated in Fig. 13(b) is movable inside the cylindrical body 331. The moving body 335 is formed in a substantially columnar shape, and is disposed inside the cylindrical body 331 with the axis thereof oriented in the axial direction of the cylindrical body 331. The moving body 335 is arranged on the right side of the spring 334.

The support plate 336 supports the roller 337 to be described later. The support plate 336 is provided at the front portion and the rear portion of the cylindrical body 331 with the plate surface of the support plate facing substantially the front-rear direction. The support plate 336 is provided so as to protrude rightward from the right end of the cylindrical body 331.

The roller 337 is rotatable. The roller 337 is disposed on the right side of the moving body 335 with the axis of the roller oriented in the substantially front-rear direction. The roller 337 is provided at a position in contact with the moving body 335. The roller 337 is provided to be rotatable about a rotation shaft 337a.

The rotation shaft 337a is rotatably supported by the front and rear support plates 336 in a state where the axis of the rotation shaft is directed substantially in the front-rear direction. The rotation shaft 337a is provided at a position eccentric from the axis of the roller 337. Specifically, the rotation shaft 337a is provided such that its axis is located on the right side of the axis of the roller 337.

The switching operation tool 340 is for performing an operation of switching the state of the switching mechanism 300. The switching operation tool 340 is formed in a substantially rectangular plate shape, and is provided with a plate surface thereof facing a left-right direction. The switching operation tool 340 is fixed to the front end of the rotation shaft 337a of the roller 337.

In the switching mechanism 300 configured as described above, the roller 337 can be rotated by operating the switching operation tool 340. Since the rotation shaft 337a of the roller 337 is eccentric, the moving body 335 is displaced in the left-right direction by rotating the roller 337 about the rotation shaft 337a. When the moving body 335 is displaced in the left-right direction, a force with which the ball 333 is pressed against the recess 312 also changes. Specifically, by displacing the moving body 335 leftward against a biasing force of the spring 334, the force by which the ball 333 is pressed against the recess 312 becomes relatively strong. On the other hand, by displacing the moving body 335 rightward by the biasing force of the spring 334, the force by which the ball 333 is pressed against the recess 312 becomes relatively weak.

By operating the switching operation tool 340 to displace the moving body 335 leftward, the main shift lever 20 can be switched to the stepped shift operation state. Specifically, when the moving body 335 is displaced leftward, the force with which the ball 333 is pressed leftward becomes relatively strong, so that the ball 333 fits into the nearby recess 312. As a result, the main shift lever 20 is brought into the stepped shift operation state in which the main shift lever can be stopped only at positions corresponding to the plurality of recesses 312.

On the other hand, the main shift lever 20 can be switched to the continuously variable shift operation state by operating the switching operation tool 340 to displace the moving body 335 rightward. Specifically, when the moving body 335 is displaced rightward, the force with which the ball 333 is pressed leftward becomes relatively weak. In this state, the force for stopping the main shift lever 20 by a friction plate 123 (see Fig. 5) provided at a rotation fulcrum of the main shift lever 20 is stronger than the force for the ball 333 to be fitted into the recess 312. As a result, the main shift lever 20 is brought into a continuously variable shift operation state where the main shift lever can be stopped at any position regardless of the position of the recess 312.

In this manner, the stepped shift operation state and the continuously variable shift operation state can be switched by operating the switching operation tool 340.

As described above, in the tractor 1B according to the third embodiment, the switching operation tool 340 and the main shift lever 20 (shift operation tool) are configured by different members.

With this configuration, the stepped shift operation state and the continuously variable shift operation state can be switched by a member different from the main shift lever 20 (shift operation tool).

Although the embodiment of the present invention has been described above, the present invention is not limited to the above configurations, and various modifications can be made within the scope of the invention described in the claims.

For example, the working vehicle according to each embodiment is the tractor 1, but the type of the working vehicle is not limited thereto. The working vehicle according to the present invention may be other agricultural vehicles, construction vehicles, industrial vehicles, or the like.

Furthermore, in the first embodiment and the second embodiment, when the main shift lever 20 switches between the stepped shift operation state and the continuously variable shift operation state, an operation of rotating the grip portion 21 is performed. However, the switching operation may be performed by another method. For example, any operation tool (button, switch, lever, or the like) may be provided in the main shift lever 20 to switch between the stepped shift operation state and the continuously variable shift operation state in conjunction with the operation tool.

Furthermore, in the first embodiment and the second embodiment, the main shift lever 20 and the engaging portion 130 are interlockingly coupled by the wire mechanism 140 and the link mechanism 240, respectively. However, a mechanism for interlockingly coupling the main shift lever 20 and the engaging portion 130 can have any structure. For example, the rotation of the main shift lever 20 (grip portion 21) may be detected by a sensor, and the engaging portion 130 may be interlocked by electrically controlling an actuator.

Furthermore, in the third embodiment, the operation of switching the stepped shift operation state and the continuously variable shift operation state is performed by the switching operation tool 340. However, as in the first and second embodiments, a mechanism for switching the stepped shift operation state and the continuously variable shift operation state by the main shift lever 20 may be provided together. That is, the main shift lever 20 and the switching operation tool 340 may both switch between the stepped shift operation state and the continuously variable shift operation state.

Furthermore, the shape of each member is an example, and may be any shape as long as the object can be achieved.

Conventionally, a technique of a working vehicle including an operation tool is known. For example, JP 6952535 B2 discloses such a technique.

A tractor described in the above literature includes a main shift lever, a PTO shift lever, and the like. The PTO shaft lever is configured to be rockable in a left-right direction and a front-rear direction. The PTO shift lever is configured to incline backward and downward from a distal end portion (grip) to be gripped by an operator toward a proximal end portion (rocking center).

In the PTO shift lever as described in the above literature, a downward rocking force acts due to its own weight or the vibration of the tractor. Therefore, the PTO lever may rock unintentionally by the operator.

One aspect of the present disclosure has been made in view of the above circumstances, and an object of the present disclosure is to provide a working vehicle capable of regulating the operation tool from moving unintentionally by the operator.

The problem to be solved by one aspect of the present disclosure is as described above, and means for solving the problem will be described below.

An aspect of the present disclosure includes: an operation tool whose own weight acts in a predetermined operation direction; and a regulation member detachably attached to a working vehicle and capable of regulating movement of the operation tool in a direction in which the own weight acts.

According to one aspect of the present disclosure, it is possible to regulate the operation tool from moving unintentionally by the operator.

An aspect of the present disclosure further includes a guide member through which the operation tool is inserted and in which a guide hole that guides an operation of the operation tool is formed, in which the operation tool is disposed so as to be eccentric to one side in a width direction with respect to an operation direction of the operation tool in the guide hole, and the regulation member includes a regulation portion disposed so as to close the one side in the width direction of the guide hole and open the other side in the width direction.

According to one aspect of the present disclosure, it is possible to regulate the operation tool from moving unintentionally by the operator, and the operator can intentionally operate the operation tool by moving the operation tool to the other side in the width direction of the guide hole.

In one aspect of the present disclosure, the regulation member further includes a guide portion capable of guiding movement of the operating tool in a direction opposite to a direction in which the own weight acts.

According to one aspect of the present disclosure, operability of the operation tool can be improved.

In one aspect of the present disclosure, the regulation member further includes a fixing portion fixed to the guide member, and the guide portion is disposed at a position displaced with respect to the fixing portion in an operation direction of the operation tool.

According to one aspect of the present disclosure, operability of the operation tool can be effectively improved.

In one aspect of the present disclosure, the regulation member is detachably attached to a back side of the guide member.

According to one aspect of the present disclosure, the guide member makes it difficult for the operator to see the regulation member.

In one aspect of the present disclosure, a boss portion capable of attaching the regulation member to the guide member is formed on a back side of the guide member, and a label is attached to the guide member so as to overlap the boss portion from a front side.

According to one aspect of the present disclosure, it is possible to improve aesthetic appearance.

In one aspect of the present disclosure, the regulation member further includes a fixing portion fixed to the guide member, the regulation portion is provided so as to be exposed to a front side of the guide member through the guide hole, and the fixing portion is provided so as to be hidden behind the guide member.

According to one aspect of the present disclosure, the fixing portion can be made difficult to see from the operator.

In one aspect of the present disclosure, a groove is formed on a back side of the guide member, and the regulation member further includes an insertion portion insertable into the groove.

According to one aspect of the present disclosure, the position of the regulation member can be easily adjusted with respect to the guide member by inserting the insertion portion into the groove.

In one aspect of the present disclosure, the regulation member further includes a recess.

According to one aspect of the present disclosure, the weight of the regulation member can be reduced.

According to one aspect of the present disclosure, it is possible to regulate the operation tool from moving unintentionally by the operator.

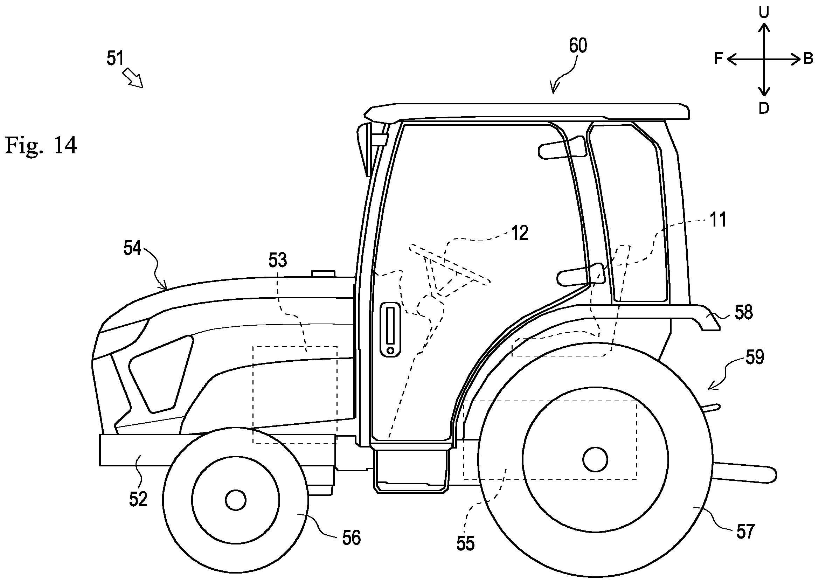

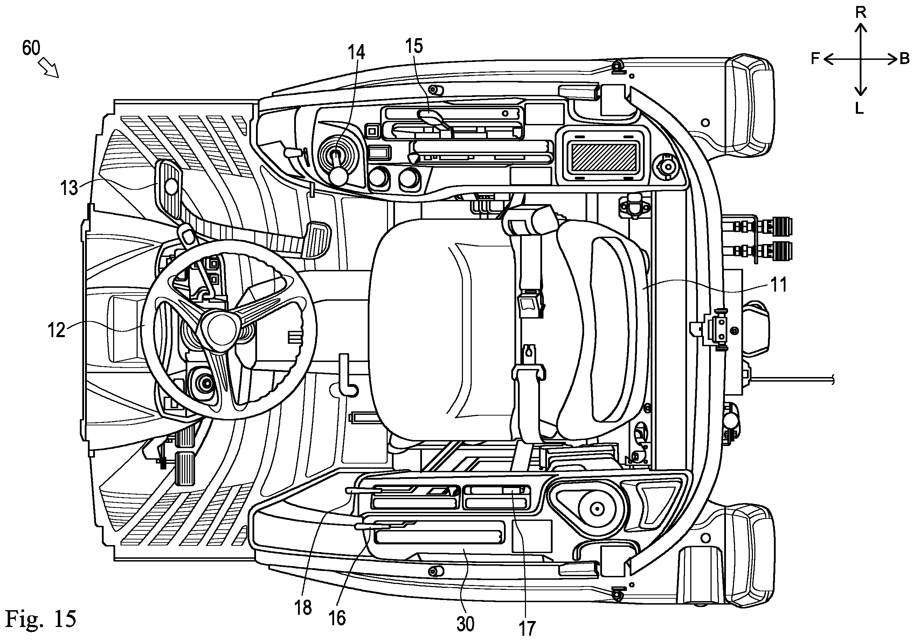

Hereinafter, a tractor 51 according to an embodiment of the present invention will be described with reference to Figs. 14 and 15.

The tractor 51 mainly includes a machine body frame 52, an engine 53, a bonnet 54, a transmission case 55, front wheels 56, rear wheels 57, a fender 58, a lifting device 59, a cabin 60, a seat 11, a steering wheel 12, and the like.

The machine body frame 52 is a frame-shaped member formed by appropriately combining a plurality of panel members. The machine body frame 52 is formed in a substantially rectangular shape in plan view. The machine body frame 52 is provided in a front portion of the tractor 51 with a longitudinal direction of the machine body frame oriented in a front-rear direction. The engine 53 is disposed at a rear portion of the machine body frame 52 and covered with the bonnet 54. The transmission case 55 is fixed to a rear portion of the engine 53.

A front portion of the machine body frame 52 is supported by a pair of the left and right front wheels 56 through a front axle mechanism (not illustrated). A rear portion of the transmission case 55 is supported by a pair of the left and right rear wheels 57 through a rear axle mechanism (not illustrated). The pair of left and right rear wheels 57 is covered with the fender 58 from substantially above.

The lifting device 59 is provided at a rear portion of the transmission case 55. Various working devices (for example, a cultivator or the like) can be mounted on the lifting device 59. The lifting device 59 can lift and lower the mounted working device by an actuator such as a hydraulic cylinder. Power of the engine 53 can be transmitted to the lifting device 59 through a rear PTO shaft (not illustrated).

Furthermore, a working device such as a mower can be mounted on a lower portion of the transmission case 55. Power of the engine 53 can be transmitted to the working device through a mid PTO shaft (not illustrated).

Power of the engine 53 can be transmitted to the front wheels 56 through the front axle mechanism and can be transmitted to the rear wheels 57 through the rear axle mechanism after being shifted by a transmission shift device (not illustrated) accommodated in the transmission case 55. The front wheels 56 and the rear wheels 57 are rotationally driven by the power of the engine 53, and the tractor 51 can travel. Furthermore, the working device mounted on the lifting device 59 can be driven by the power of the engine 53.

The cabin 60 is provided behind the engine 53. Inside the cabin 60, a living space on which an operator boards is formed. As illustrated in Fig. 15, the seat 11 on which an operator sits is disposed substantially at the center of the cabin 60. An operation tool for an operator to operate is provided around the seat 11. Hereinafter, the operation tool will be described.

The steering wheel 12 for adjusting a turning angle of the front wheels 56, a shift pedal 13 for changing a transmission gear ratio, and the like are disposed in front of the seat 11 (in a front portion of the cabin 60). A loader lever 14 for operating a front loader, a cruise lever 15 for causing the tractor 51 to travel at a constant speed, and the like are disposed on the right side of the seat 11 (the right portion of the cabin 60).

An auxiliary shift lever 16, a PTO selection lever 17, a PTO clutch lever 18, and the like are disposed on the left side of the seat 11 (the left portion of the cabin 60). The auxiliary shift lever 16 is provided for shifting the transmission shift device. The PTO selection lever 17 is for selecting the PTO shaft to which the power from the engine 53 is transmitted, of the mid PTO shaft and the rear PTO shaft. The PTO clutch lever 18 switches whether or not power of the engine 53 can be transmitted to the PTO shaft selected by the PTO selection lever 17.

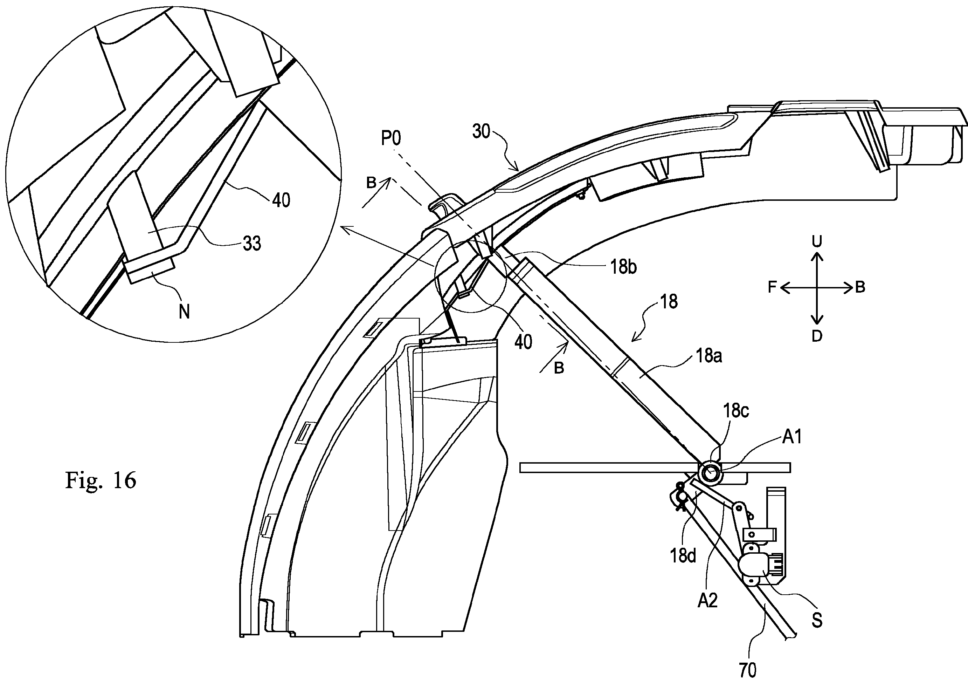

As illustrated in Fig. 16, the PTO clutch lever 18 is supported by a rocking shaft A1 fixed to a vehicle body so as to be rockable up and down. The PTO clutch lever 18 is inclined backward and downward from a grip (front upper end portion) gripped by an operator toward the rocking shaft A1 in side view. A force acts on the PTO clutch lever 18 in a direction of rocking downward due to its own weight, the vibration of the tractor 51, and the like. In the present embodiment, the regulation member 40 regulates the rocking of the PTO clutch lever 18 (rocking not intended by the operator) due to the own weight, the vibration of the tractor 51, and the like.

Hereinafter, the regulation member 40 and various members related to the regulation member 40 will be described with reference to Figs. 16 to 24. Specifically, the PTO clutch lever 18, a transmission rod 70, a guide member 30, and the regulation member 40 will be described.

As illustrated in Figs. 16 to 18, the PTO clutch lever 18 includes a lever main body 18a, a protective portion 18b, a cylindrical portion 18c, and an attachment portion 18d. The lever main body 18a is a portion rocked by the operator. The lever main body 18a is formed in a substantially plate shape. The lever main body 18a is formed so as to be inclined backward and downward in side view. A rear lower end portion of the lever main body 18a is fixed to the cylindrical portion 18c to be described later, and when a force is applied to a front upper end portion in the left-right direction, the lever main body can slightly bend to the left and right. The grip is fixed to the front upper end portion of the lever main body 18a.

The protective portion 18b is for protecting the lever main body 18a. The protective portion 18b is externally fitted to an upper portion of the lever main body 18a. The protective portion 18b is made of, for example, an elastic body such as rubber. In the present embodiment, a right and left width (distance from the left side surface to the right side surface) of the protective portion 18b is 6 mm to 10 mm. Specifically, the protective portion 18b is configured to have a right and left width of 8 mm. Note that the right and left width of the protective portion 18b is not limited to 8 mm, and can be appropriately changed according to a right and left width of the guide hole 31 of the guide member 30 described later, and the like.

The cylindrical portion 18c is a substantially cylindrical portion. The cylindrical portion 18c is disposed with its axial direction oriented in the left-right direction. The cylindrical portion 18c is rockably supported by the rocking shaft A1.

The attachment portion 18d is a portion to which a shaft member A2 and the transmission rod 70 are attached. The attachment portion 18d is formed in a substantially plate shape. The attachment portion 18d is formed to extend forward and downward from an outer periphery of the cylindrical portion 18c. The attachment portion 18d is coupled to a sensor S for detecting a rocking angle of the PTO clutch lever 18 through the shaft member A2.

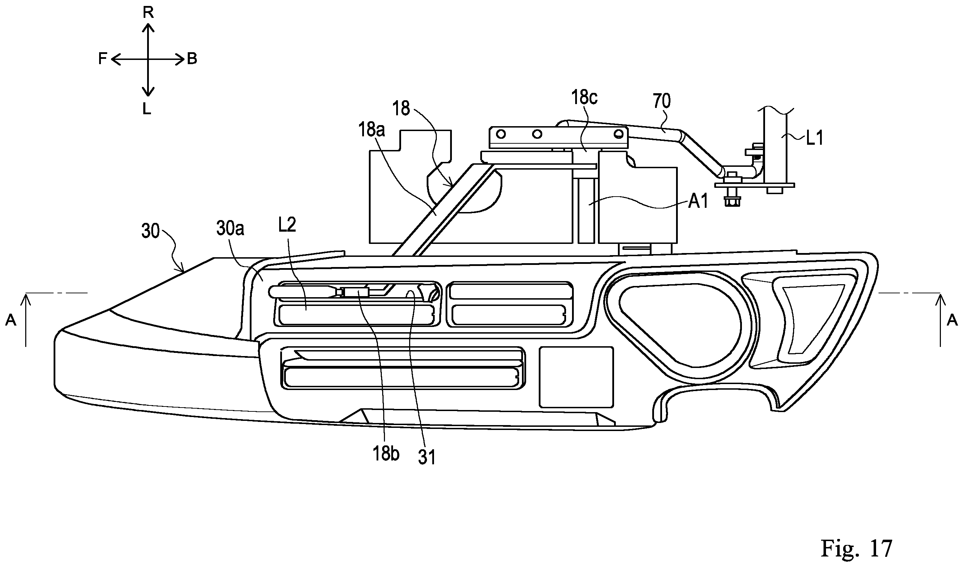

The transmission rod 70 is for transmitting a rocking operation of the PTO clutch lever 18 to a shifter (not illustrated) of the transmission case 55. One end portion of the transmission rod 70 is rotatably attached to the attachment portion 18d. The other end portion of the transmission rod 70 is attached to the shifter of the transmission case 55 through a coupling member L1 (see Fig. 17).

When the lever main body 18a of the PTO clutch lever 18 is operated to rock, the attachment portion 18d and the transmission rod 70 rock with the rocking. The rocking of the transmission rod 70 is transmitted to the shifter through the coupling member L1. As a result, the shifter is moved, and transmission/non-transmission of the power from the engine 53 to the PTO shaft is switched. Furthermore, when the lever main body 18a is operated to rock, the shaft portion of the sensor S is rocked through the shaft member A2. The sensor S detects a rocking angle of the PTO clutch lever 18 on the basis of the rocking of the shaft portion.

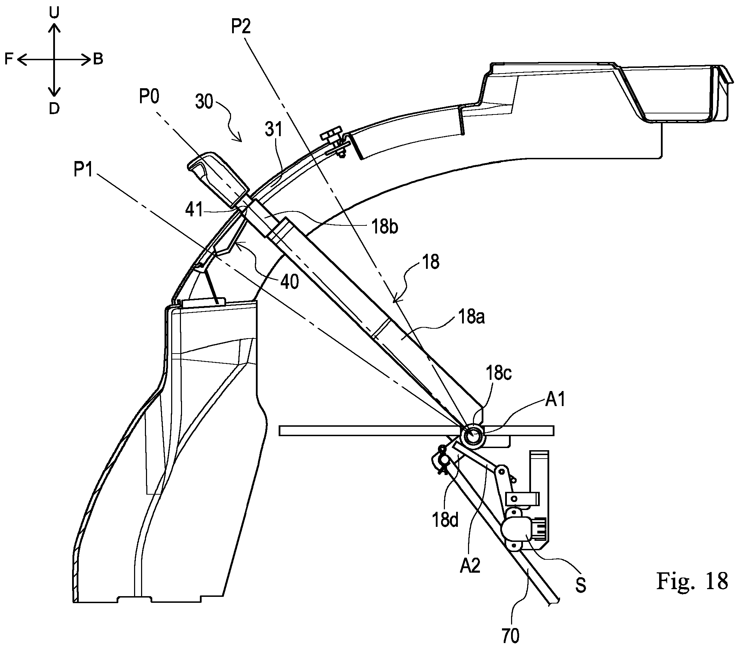

In the present embodiment, the PTO clutch lever 18 is configured to be rockable over a range from a first operation position P1 to a second operation position P2 illustrated in Fig. 18. The first operation position P1 and the second operation position P2 are positions where the PTO shaft can be rotated at a predetermined rotational speed.

By rocking the PTO clutch lever 18 downward, the operator can move the PTO clutch lever 18 to the first operation position P1 and rotate the PTO shaft. By rocking the PTO clutch lever 18 upward, the operator can move the PTO clutch lever 18 to the second operation position P2 and rotate the PTO shaft. Furthermore, the operator can stop the rotation of the PTO shaft by moving the PTO clutch lever 18 to a neutral position P0 between the first operation position P1 and the second operation position P2. Note that Figs. 16 to 21 illustrate the PTO clutch lever 18 rocked to the neutral position P0.

The guide member 30 illustrated in Figs. 16 to 18 is for guiding the auxiliary shift lever 16, the PTO selection lever 17, the PTO clutch lever 18, and the like. The guide member 30 is formed in a substantially arc shape in side view along the fender 58 (see Fig. 14). The guide member 30 is provided in the cabin 60 so as to cover the PTO clutch lever 18 and the like (below the protective portion 18b) from above.

The guide member 30 has a curved (arc-shaped in side view) upper surface that bulges forward from the rear upper portion to the front lower portion. In the present embodiment, among the upper surfaces, a surface facing upward (surface visible to the operator) is referred to as a "front surface 30a", and a surface facing downward (surface invisible to the operator) is referred to as a "back surface 30b". The upper side of the upper surface of the guide member 30 is referred to as a "front side", and the lower side is referred to as a "back side". The guide member 30 is formed by resin molding. As illustrated in Figs. 16, 17, and 19, the guide member 30 includes a guide hole 31, a groove 32, and a boss portion 33.

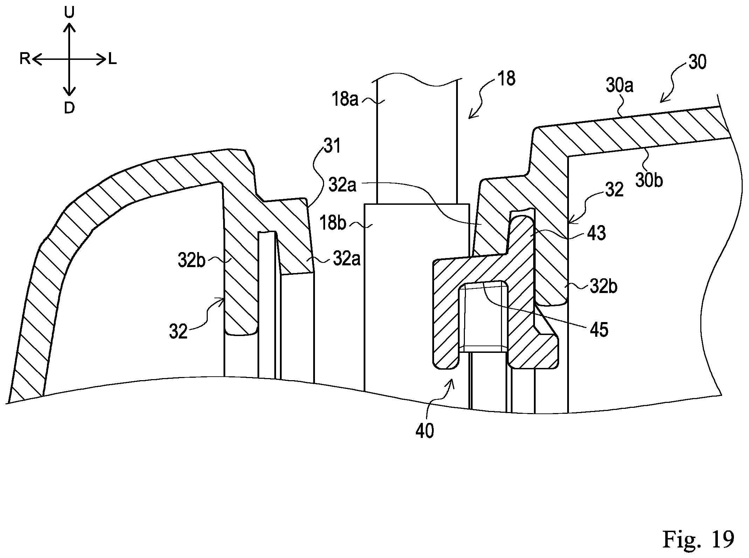

The guide hole 31 is a hole for guiding the rocking operation of the PTO clutch lever 18. The guide hole 31 is provided so as to vertically penetrate the guide member 30. The guide hole 31 is formed to extend in an operation direction of the PTO clutch lever 18 (a clockwise direction and a counterclockwise direction in side view with the rocking shaft A1 as a center). The PTO clutch lever 18 is inserted into the guide hole 31. As illustrated in Fig. 19, the guide hole 31 and the protective portion 18b of the PTO clutch lever 18 are disposed at substantially the same height position. The right and left width of the guide hole 31 is formed to be larger than the right and left width (8 mm in the present embodiment) of the protective portion 18b.

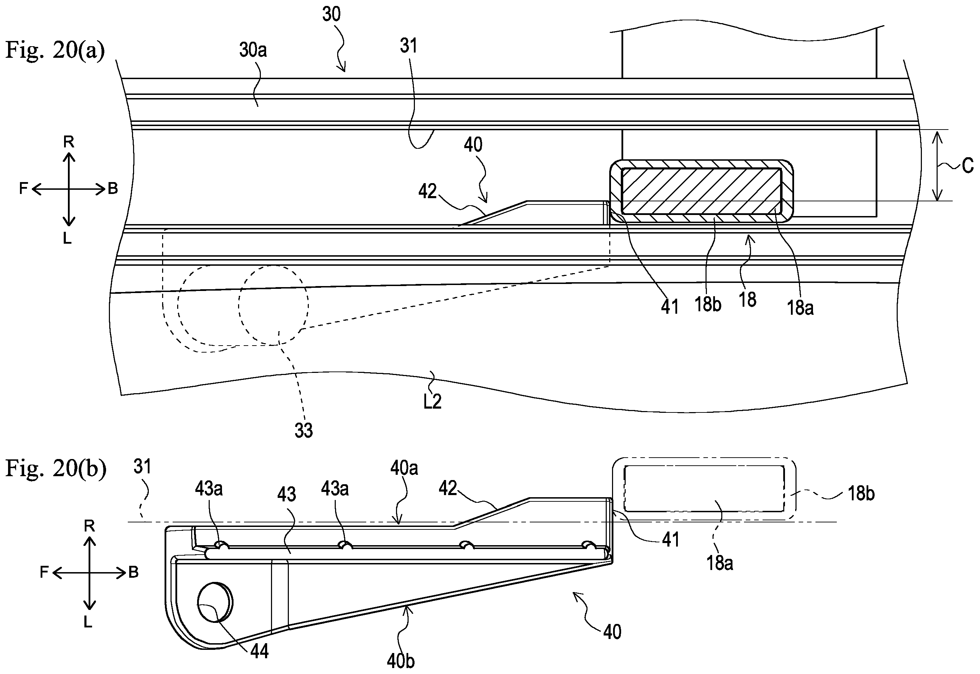

As illustrated in Figs. 19 and 20(a), in the present embodiment, the PTO clutch lever 18 is disposed such that the left and right central portions of the PTO clutch lever 18 (protective portion 18b) are shifted leftward with respect to the left and right central portions of the guide hole 31. In this way, the PTO clutch lever 18 is disposed eccentrically to the left side of the guide hole 31 (one side in the width direction orthogonal to the operation direction of the PTO clutch lever 18).

The groove 32 illustrated in Figs. 19, 21, and 22 is formed on the back surface 30b of the guide member 30. The groove 32 is formed to extend in the operation direction of the PTO clutch lever 18. The groove 32 is formed on each of the left and right sides of the guide hole 31. The groove 32 includes a first side wall 32a and a second side wall 32b.

The first side wall 32a is formed to extend downward from an inner surface of the guide hole 31. The first side wall 32a is formed so as to surround the guide hole 31. The second side wall 32b is disposed at a distance from the first side wall 32a on the left and right sides (the left and right outer sides of the guide hole 31). The second side wall 32b is provided on each of the left side and the right side of the first side wall 32a. The second side wall 32b is formed to extend downward from the back surface 30b of the guide member 30 to a position lower than the first side wall 32a. In the present embodiment, the first side wall 32a, the second side wall 32b, and the back surface 30b of the guide member 30 form the groove 32 having a substantially U shape in cross-sectional view with its opening portion facing downward (see Fig. 19).

The boss portion 33 illustrated in Figs. 16, 21, and 22 is for attaching the regulation member 40 to the guide member 30. The boss portion 33 is formed on the back surface 30b (back side) of the guide member 30. The boss portion 33 is formed in a cylindrical shape whose axial direction is substantially downward. The boss portion 33 is formed on the left side of the second side wall 32b on the left side of the groove 32. Furthermore, the boss portion 33 is formed on the front side of the PTO clutch lever 18 (protective portion 18b) located at the neutral position P0.

As illustrated in Figs. 17 and 20, a label L2 is attached to the front surface 30a of the guide member 30 on the side opposite to the boss portion 33 so as to overlap with the boss portion 33 in plan view. Information (for example, the neutral position P0 or the like) related to the PTO clutch lever 18 is printed on the label L2.

Here, in a case where the guide member 30 is manufactured by resin molding, the opposite side (front surface 30a side) of the boss portion 33 may be deformed. In the present embodiment, since the deformed portion (for example, a recess) can be hidden by the label L2, the aesthetic appearance can be improved.

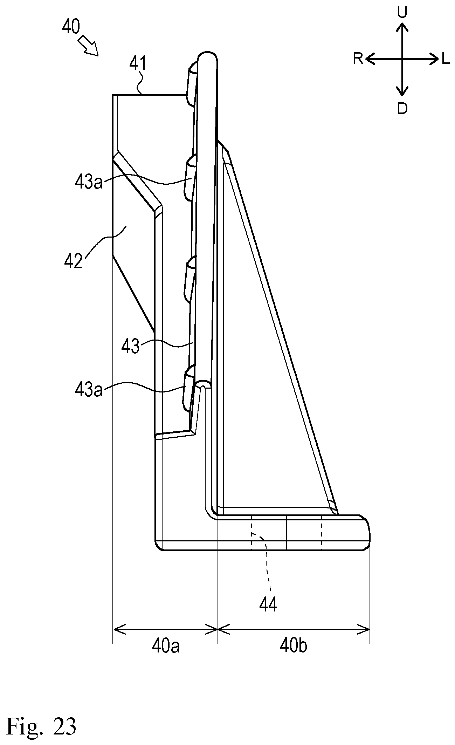

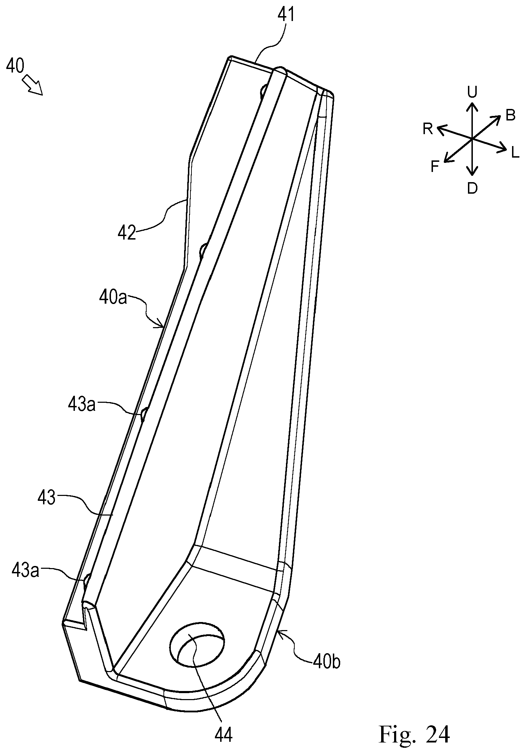

The regulation member 40 illustrated in Figs. 16, 23, and 24 is provided to regulate rocking of the PTO clutch lever 18 (unintended ricking downward due to its own weight or the like). The regulation member 40 is formed in a longitudinal shape extending forward and downward. As illustrated in Figs. 23 and 24, the regulation member 40 includes a first plate portion 40a and a second plate portion 40b.

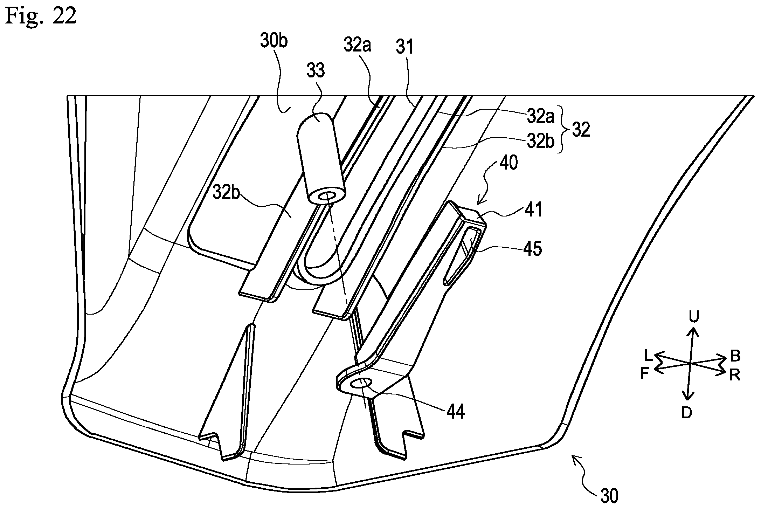

The first plate portion 40a is formed so as to extend in a longitudinal direction of the regulation member 40, and is disposed with the plate surface thereof facing left and right. The right side surface of the first plate portion 40a is formed such that the rear end portion protrudes rightward. The second plate portion 40b is disposed with its plate surface oriented substantially vertically. The second plate portion 40b is formed so as to extend leftward from the lower end portion of the left side surface of the first plate portion 40a. The second plate portion 40b is formed such that the right and left width decreases toward the rear end. The regulation member 40 is formed in a substantially L-shaped cross section by the first plate portion 40a and the second plate portion 40b. The regulation member 40 includes a regulation portion 41, a guide portion 42, an insertion portion 43, a fastening hole 44, and a recess 45 (see Fig. 22).

The regulation portion 41 illustrated in Figs. 20, 22, and 24 is a portion for regulating rocking of the PTO clutch lever 18. The regulation portion 41 is configured by a rear end surface of the first plate portion 40a of the regulation member 40. As illustrated in Fig. 20, the regulation portion 41 is formed so as to protrude rightward from the left side surface of the guide hole 31. In the present embodiment, the regulation portion 41 is formed so as to protrude 2 mm to 4 mm from the left side surface of the guide hole 31. More specifically, the regulation portion 41 is formed so as to protrude 3 mm from the left side surface of the guide hole 31. In this way, the regulation portion 41 is provided such that at least a part thereof is located inside the guide hole 31 in plan view and is exposed to the front side of the guide member 30 through the guide hole 31 (the operator can visually recognize the regulation portion). Note that a protruding width of the regulation portion 41 with respect to the guide hole 31 is not limited to 3 mm, and can be appropriately changed according to the right and left width of the guide hole 31, the right and left width of the PTO clutch lever 18, and the like.

The regulation portion 41 configured as described above is disposed so as to abut on the protective portion 18b of the PTO clutch lever 18 at the neutral position P0. A gap C through which the PTO clutch lever 18 can move in the operation direction is formed between the regulation portion 41 and the right side surface of the guide hole 31. In this way, the regulation portion 41 is disposed so as to close the left side of the guide hole 31 and open the right side. In the present embodiment, a width of the gap C is about 7 mm to 11 mm. More specifically, the width of the gap C is 9 mm. Note that the width of the gap C is not limited to 9 mm, and can be appropriately changed according to the right and left width of the guide hole 31, the right and left width of the PTO clutch lever 18, and the like.

The guide portion 42 illustrated in Figs. 20, 23, and 24 is a portion capable of guiding the operation of the PTO clutch lever 18. The guide portion 42 is formed in a front-rear middle portion (in front of the regulation portion 41) of the right side surface of the first plate portion 40a. The guide portion 42 is configured by an inclined surface that extends to the left and right inner sides (right side) of the guide hole 31 as it goes rearward. As illustrated in Fig. 20, the guide portion 42 is formed so as to cross the left side surface of the guide hole 31 in plan view. The guide portion 42 can guide the upward rocking operation of the PTO clutch lever 18.

Specifically, in a case where the PTO clutch lever 18 is operated to rock upward (toward the neutral position P0) from the first operation position P1 illustrated in Fig. 18, the PTO clutch lever 18 comes into contact with the guide portion 42 illustrated in Fig. 20 from the front. The PTO clutch lever 18 is rocked upward while being guided rightward and rearward along the shape of the guide portion 42. In this way, the PTO clutch lever 18 is moved to the neutral position P0 through the right side (the gap C) of the regulation member 40. In this manner, the guide portion 42 can guide the upward rocking operation of the PTO clutch lever 18.

The insertion portion 43 illustrated in Figs. 19 and 24 is a portion that can be inserted into the groove 32 of the guide member 30. The insertion portion 43 is formed so as to extend upward from the upper surface of the first plate portion 40a of the regulation member 40. The insertion portion 43 is formed from the front end portion to the rear end portion of the regulation member 40. A protruding portion 43a protruding rightward is formed in the insertion portion 43. In this way, the insertion portion 43 is formed such that the right and left width is partially increased.

As illustrated in Fig. 20(b), the insertion portion 43 is formed on the left side (the left and right outer sides of the guide hole 31) of the guide portion 42. The insertion portion 43 is formed so as to overlap the front surface 30a of the guide member 30 in plan view. Thus, the insertion portion 43 is provided to be hidden behind the guide member 30 (see Fig. 20(a)).

The fastening hole 44 illustrated in Figs. 20(b), 21, and 22 is a substantially circular hole to which a screw N is fastened. The fastening hole 44 is formed so as to vertically penetrate the second plate portion 40b of the regulation member 40. The fastening hole 44 is formed to be shifted in position in the longitudinal direction of the regulation member 40 with respect to the guide portion 42. More specifically, the fastening hole 44 is formed on the left front side of the guide portion 42 (front end portion of the second plate portion 40b). The fastening hole 44 is disposed on an extension line of a straight line along the guide portion 42 in plan view (see Fig. 20(b)). The fastening hole 44 is located on each of the left and right outer sides of the guide hole 31 and is provided so as to be hidden behind the guide member 30.

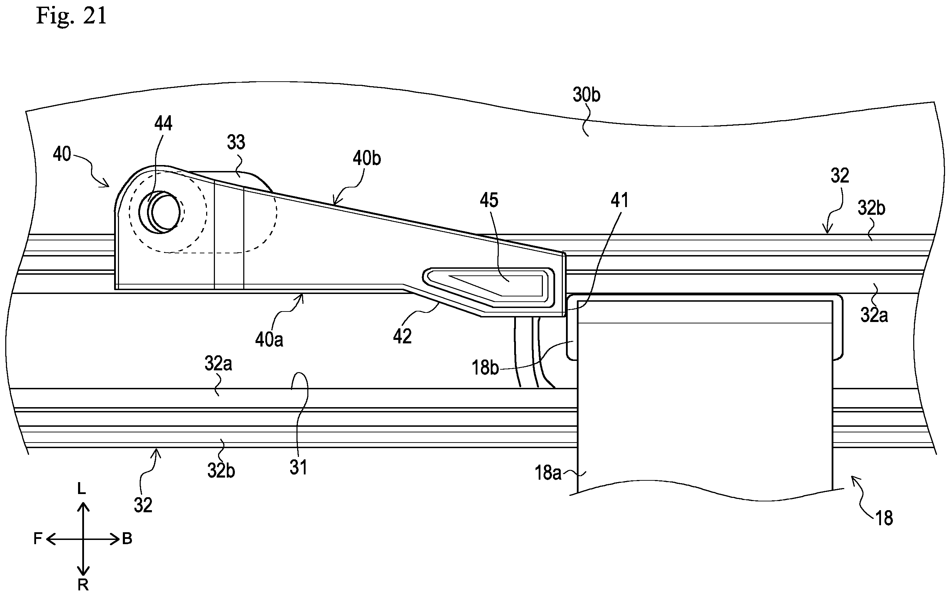

The recess 45 illustrated in Figs. 21 and 22 is a portion formed in a concave shape. The recess 45 is formed in the vicinity of the regulation portion 41 and the guide portion 42 (the rear end portion of the first plate portion 40a). More specifically, the recess 45 is formed between the regulation portion 41 and the guide portion 42. The recess 45 is formed so as to be recessed upward on the lower surface of the first plate portion 40a. The recess 45 is formed along the shape of the rear end portion of the first plate portion 40a. As a result, it is possible to suppress the thickness of the rear end portion having a large right and left width in the first plate portion 40a from becoming thicker than other portions.

The regulation member 40 configured as described above is attached to the guide member 30 from below such that the center of the boss portion 33 and the center of the fastening hole 44 overlap each other. At this time, the insertion portion 43 of the regulation member 40 is inserted into the groove 32 as illustrated in Fig. 19. As a result, the right and left positions of the regulation member 40 can be easily determined with respect to the guide member 30. Furthermore, in the present embodiment, the insertion portion 43 is formed so as to partially have substantially the same right and left width as the groove 32 by forming the protruding portion 43a. As a result, the insertion portion 43 (the protruding portion 43a) can be sandwiched between the grooves 32, and the regulation member 40 can be prevented from falling off from the guide member 30.

After the insertion portion 43 is inserted into the groove 32, the screw N (see Fig. 16) is fastened to the fastening hole 44 and the boss portion 33 illustrated in Fig. 22. As a result, the regulation member 40 (fastening hole 44) is fixed to the guide member 30. Thus, the regulation member 40 is detachably attached to the back side of the guide member 30.

The regulation member 40 configured as described above can regulate the rocking of the PTO clutch lever 18. Hereinafter, a specific description will be given.

The PTO clutch lever 18 of the present embodiment attempts to rock downward about the rocking shaft A1 by its own weight, the vibration of the tractor 51, or the like. In the present embodiment, the regulation portion 41 abuts on the protective portion 18b of the PTO clutch lever 18 at the neutral position P0 illustrated in Fig. 18. Therefore, in a case where the PTO clutch lever 18 is in the neutral position P0, even if the PTO clutch lever 18 attempts to rock downward due to its own weight of the PTO clutch lever 18 or the vibration of the tractor 51, the rocking is regulated by the regulation portion 41. As a result, rocking of the PTO clutch lever 18 unintended by the operator can be regulated.

Furthermore, since the regulation member 40 of the present embodiment is detachable from the guide member 30, it can be attached to the guide member 30 as necessary. For example, the regulation member 40 can be provided only in a vehicle type that is likely to rock relatively downward from the neutral position P0 due to its own weight of the PTO clutch lever 18 or the like.

Furthermore, in the present embodiment, the PTO clutch lever 18 can pass through the right side (the gap C illustrated in Fig. 20) of the regulation portion 41. Therefore, the operator bends the lever main body 18a of the PTO clutch lever 18 rightward and then rocks the lever main body downward, so that the PTO clutch lever 18 can rock from the neutral position P0 toward the first operation position P1.

Furthermore, as illustrated in Fig. 20(b), the guide member 30 is disposed such that the longitudinal direction is parallel to the operation direction of the PTO clutch lever 18 in plan view (faces the front-rear direction in plan view). In the present embodiment, the guide portion 42 and the fastening hole 44 (a fixing part of the regulation member 40) are disposed to be shifted in position in the operation direction of the PTO clutch lever 18. As a result, when the upward rocking (backward movement in Fig. 20) of the PTO clutch lever 18 is guided by the guide portion 42, the regulation member 40 is easily bent, and the guide portion 42 can smoothly guide the PTO clutch lever 18.

Furthermore, in the present embodiment, as illustrated in Fig. 21, the recess 45 is formed in the vicinity of the regulation portion 41 and the guide portion 42, so that the thickness is suppressed from increasing. As a result, in a case where the PTO clutch lever 18 is operated with a strong force, the vicinity of the regulation portion 41 and the guide portion 42 is easily bent, so that it is possible to prevent damage to the regulation member 40 and the PTO clutch lever 18. Furthermore, the recess 45 is formed not on the upper surface but on the lower surface of the regulation member 40. As a result, it is possible to suppress accumulation of dirt, dust, or the like in the recess 45, and to improve maintainability.

As described above, the tractor 51 (working vehicle) according to the present embodiment includes the PTO clutch lever 18 (operation tool) whose own weight acts in a predetermined operation direction (a direction rocking downward about the rocking shaft A1), and the regulation member 40 detachably attached to the tractor 51 and capable of regulating the movement of the PTO clutch lever 18 in the direction in which the own weight acts.

With this configuration, the regulation member 40 for regulating the PTO clutch lever 18 from moving unintentionally by the operator (due to the own weight of the PTO clutch lever 18 or the vibration of the tractor 51) can be attached to the tractor 51 as necessary.

Furthermore, the guide member 30 through which the PTO clutch lever 18 is inserted and in which the guide hole 31 for guiding the operation of the PTO clutch lever 18 is formed is further provided, in which the PTO clutch lever 18 is disposed so as to be eccentric to one side (left side) in the width direction with respect to the operation direction of the PTO clutch lever 18 in the guide hole 31, and the regulation member 40 includes the regulation portion 41 disposed so as to close the one side (left side) in the width direction of the guide hole 31 and release the other side (right side) in the width direction (see Fig. 20(a)).

With this configuration, it possible to regulate the PTO clutch lever 18 from moving unintentionally by the operator, and the PTO clutch lever 18 is moved to the other side (right side) in the width direction of the guide hole 31, so that the operator can intentionally operate the PTO clutch lever 18.

Furthermore, the regulation member 40 further includes the guide portion 42 capable of guiding the movement of the PTO clutch lever 18 in a direction opposite to the direction in which the own weight acts (a direction in which the PTO clutch lever rocks upward about the rocking shaft A1).

With such a configuration, operability of the PTO clutch lever 18 can be improved.

Furthermore, the regulation member 40 further includes the fastening hole 44 (fixing portion) fixed to the guide member 30, and the guide portion 42 is disposed at a position displaced with respect to the fastening hole 44 in the operation direction of the PTO clutch lever 18 (see Fig. 20(b)).

With such a configuration, when the PTO clutch lever 18 is guided by the guide portion 42, the regulation member 40 is bent to more easily guide the PTO clutch lever 18. As a result, the operability of the PTO clutch lever 18 can be effectively improved.

Furthermore, the regulation member 40 is detachably attached to the back side of the guide member 30 (the back surface 30b side that is invisible to the operator) (see Fig. 19).

With such a configuration, the regulation member 40 can be made difficult to see from the operator by the guide member 30.

Furthermore, the boss portion 33 to which the regulation member 40 can be attached to the guide member 30 is formed on the back side of the guide member 30, and the label L2 is attached to the guide member 30 so as to overlap the boss portion 33 from the front side (the front surface 30a side visible to the operator) (see Fig. 20(a)).

With such a configuration, it is possible to improve the aesthetic appearance.

Furthermore, the regulation member 40 further includes the fastening hole 44 (fixing portion) fixed to the guide member 30, the regulation portion 41 is provided so as to be exposed to the front side of the guide member 30 through the guide hole 31, and the fastening hole 44 is provided so as to be hidden behind the guide member 30 (see Fig. 20).

With such a configuration, the fastening hole 44 can be made difficult to see from the operator.

Furthermore, the groove 32 is formed on the back side of the guide member 30, and the regulation member 40 further includes the insertion portion 43 that can be inserted into the groove 32 (see Fig. 19).

With this configuration, the position of the regulation member 40 can be easily adjusted with respect to the guide member 30 by inserting the insertion portion 43 into the groove 32.

Furthermore, the regulation member 40 further includes the recess 45.

With such a configuration, the weight of the regulation member 40 can be reduced.

Note that the tractor 51 according to the present embodiment is an embodiment of the working vehicle according to the present invention.

Furthermore, the PTO clutch lever 18 according to the present embodiment is an embodiment of the operation tool according to the present invention.

Furthermore, the fastening hole 44 according to the present embodiment is an embodiment of the fixing portion according to the present invention.

Although the embodiment of the present invention has been described above, the present invention is not limited to the above configurations, and various modifications can be made within the scope of the invention described in the claims.

For example, the working vehicle according to the present embodiment is the tractor 51, but the type of the working vehicle is not limited thereto. The working vehicle may be other agricultural vehicles, construction vehicles, industrial vehicles, or the like.

Furthermore, although the regulation member 40 regulates the rocking (movement) of the PTO clutch lever 18, the operation tool in which the regulation member 40 regulates the rocking is not limited to the PTO clutch lever 18. For example, the regulation member 40 may regulate the movement of the auxiliary shift lever 16 or the PTO selection lever 17.

Furthermore, although the PTO clutch lever 18 is disposed so as to be eccentric to the left side with respect to the guide hole 31, the positional relationship of the PTO clutch lever 18 with respect to the guide hole 31 is not particularly limited. For example, the PTO clutch lever 18 may be disposed so as to be eccentric to the right side with respect to the guide hole 31. In this case, it is desirable that the regulation member 40 is disposed not on the left side but on the right side of the guide hole 31. Furthermore, the PTO clutch lever 18 is not necessarily eccentric to the left and right with respect to the guide hole 31.

Furthermore, the regulation member 40 includes the guide portion 42, but is not limited thereto, and may not include the guide portion 42. Furthermore, the regulation member 40 includes the recess 45, but is not limited thereto, and may not include the recess 45.

Furthermore, although the regulation member 40 is fixed to the guide member 30 by fastening the screw N to the boss portion 33 and the fastening hole 44, a method of fixing the regulation member to the guide member 30 is not particularly limited. For example, the regulation member 40 may be fixed to the groove 32 by an adhesive applied to the insertion portion 43.

Furthermore, the regulation member 40 is fixed to the back surface 30b of the guide member 30, but is not limited thereto, and may be fixed to the front surface 30a of the guide member 30. Furthermore, the regulation member 40 may be fixed to a member different from the guide member 30.

### INDUSTRIAL APPLICABILITY

The present invention can be applied to a working vehicle including a shift operation tool capable of performing a shift operation.

### REFERENCE SIGNS LIST

1, 1A, 1B, 51: Tractor
18: PTO clutch lever
20: Main shift lever
40: Regulation member
100, 200, 300: Switching mechanism
110: Support portion
112: Groove
120: Supported portion
123: Friction plate
130, 230, 330: Engaging portion
140: Wire mechanism
150: Biasing portion
240: Link mechanism
340: Switching operation portion

## Claims

1. A working vehicle comprising:
a shift operation tool capable of performing a shift operation;
a switching mechanism capable of switching between a stepped shift operation state in which the shift operation tool can be shifted stepwise and a continuously variable shift operation state in which the shift operation tool can be shifted steplessly; and
a switching operation tool capable of performing an operation of switching a state of the switching mechanism.

2. The working vehicle according to claim 1, wherein
the switching mechanism includes:
an engaged portion provided in a vehicle body and having a plurality of recesses formed according to a shift position of the shift operation tool; and
an engaging portion provided to be relatively movable with respect to the shift operation tool, and
the switching operation tool
is capable of switching the engaging portion between a position where the engaging portion can be engaged with the recesses and a position where the engaging portion cannot be engaged with the recesses.

3. The working vehicle according to claim 2, wherein
the switching mechanism includes
a biasing portion that constantly biases the engaging portion toward the engaged portion.

4. The working vehicle according to claim 2, wherein
the switching mechanism includes
a link mechanism that interlockingly couples the switching operation tool and the engaging portion.

5. The working vehicle according to claim 2, wherein
the switching mechanism includes
a wire mechanism that interlockingly couples the switching operation tool and the engaging portion using a wire.

6. The working vehicle according to claim 2, wherein
the switching mechanism includes:
a first contact portion provided in the vehicle body; and
a second contact portion provided in the shift operation tool and capable of regulating an operation of the shift operation tool at any shift position by a frictional force between the shift operation tool and the first contact portion.

7. The working vehicle according to claim 6, wherein the engaged portion and the first contact portion are configured by a common member.

8. The working vehicle according to any one of claims 1 to 7, wherein the switching operation tool and the shift operation tool are configured by a common member.

9. The working vehicle according to claim 8, wherein the switching operation tool includes a grip portion of the shift operation tool, and switches between the stepped shift operation state and the continuously variable shift operation state by rotating the grip portion.

10. The working vehicle according to any one of claims 1 to 7, wherein the switching operation tool and the shift operation tool are configured by different members.
